# EUROPEAN PATENT APPLICATION

(11) **EP 4 844 600 A1**
(43) Date of publication of application: **25.11.2026**
(21) Application number: 25820167.2
(22) Date of filing: 05.06.2025
(51) Int. Cl.: G06F 16/23, G06F 16/22, G06F 16/25, G06F 16/9035, G06N 5/04, G06N 3/042, G06N 3/08, G06V 10/82, G06V 10/86, G06V 30/18

(54) **METHOD FOR MANAGING DYNAMIC DATABASE FOR PROVIDING PERSONALIZED SERVICE AND ELECTRONIC DEVICE FOR PERFORMING SAME**

(30) Priority: 07.06.2024 KR 20240074185; 21.02.2025 KR 20250023157
(71) Applicant: Samsung Electronics Co., Ltd., Suwon-si, Gyeonggi-do 16677 (KR)
(72) Inventor: LEE, Dongseop, Suwon-si, Gyeonggi-do 16677 (KR); LEE, Kyenghun, Suwon-si, Gyeonggi-do 16677 (KR); KO, Hyeonmok, Suwon-si, Gyeonggi-do 16677 (KR); KIM, Daehyun, Suwon-si, Gyeonggi-do 16677 (KR); YANG, Jaechul, Suwon-si, Gyeonggi-do 16677 (KR)
(74) Representative: Gulde & Partner
(86) International application number: PCT/KR2025/007777
(87) International publication number: WO 2025/254482

(57) **Abstract**

A method of managing a dynamic database for providing a personalized service includes obtaining user input information through at least one application (app) installed on an electronic device; obtaining, from the user input information, context information that includes information indicating a reason for an event and that relates to the personalized service; obtaining classified context information by classifying the context information based on reason information included in the context information, and storing the classified context information in the dynamic database; and executing the personalized service on the electronic device based on the context information and at least one other piece of context information connected to the context information.

## Description

### TECHNICAL FIELD

The disclosure relates to a method of managing a dynamic database for providing a personalized service and an electronic device for performing the method.

### BACKGROUND ART

In modern society, functions of electronic devices, such as portable terminals such as smartphones, are becoming more diversified as the demand for user-customized service provision increases. Electronic devices may provide services to users based on predefined information, databases, such as those for modeling knowledge graphs, may facilitate dynamically generated or updated by reflecting real-time inputs of users and interactions. However, existing techniques have difficulty generating or updating nodes and edges in the knowledge graph in response to real-time inputs of users due to their complex structures and large amounts of stored information.

### DISCLOSURE OF INVENTION

### SOLUTION TO PROBLEM

According to an aspect of the disclosure, a method of managing a dynamic database for providing a personalized service includes obtaining user input information through at least one application (app) installed on an electronic device; obtaining, from the user input information, context information that includes information indicating a reason for an event and that relates to the personalized service; obtaining classified context information by classifying the context information, based on reason information included in the context information, and storing the classified context information in the dynamic database; and executing the personalized service on the electronic device based on the context information and at least one other piece of context information connected to the context information.

According to an aspect of the disclosure, an electronic device includes memory storing at least one instruction; and at least one processor comprising processing circuitry, wherein the at least one instruction, when executed by the at least one processor, individually or collectively, cause the electronic device to obtain user input information through at least one application (app) installed on the electronic device; obtain, from the user input information, context information that includes information indicating a reason for an event and that relates to a personalized service; obtain classified context information by classifying the context information based on reason information included in the context information, and store the classified context information in a dynamic database; and execute the personalized service on the electronic device based on the context information and at least one other piece of context information connected to the context information.

### BRIEF DESCRIPTION OF DRAWINGS

The above and other aspects, features, and advantages of certain embodiments of the present disclosure are more apparent from the following description taken in conjunction with the accompanying drawings, in which:
FIG. 1 is a diagram illustrating an overall flow in which an electronic device manages a database based on user input information, according to an embodiment of the disclosure.
FIG. 2 is a diagram illustrating a structure of a subject information, event information, location information, and temporal information, and Reason (4W1R)-based knowledge graph according to an embodiment of the disclosure.
FIG. 3 is a diagram illustrating a structure of a 4W1R-based knowledge graph according to an embodiment of the disclosure.
FIG. 4 is a diagram illustrating modules included in an electronic device, according to an embodiment of the disclosure.
FIG. 5 is a diagram illustrating hardware components included in an electronic device, according to an embodiment of the disclosure.
FIG. 6 is a diagram illustrating a situation in which users make a call through electronic devices, according to an embodiment of the disclosure.
FIGS. 7 and 8 are diagrams illustrating knowledge graphs generated by an electronic device based on call contents of FIG. 6, according to an embodiment of the disclosure.
FIG. 9 is a diagram illustrating a situation in which users make a call through an electronic device, according to an embodiment of the disclosure.
FIG. 10 is a diagram illustrating an example in which an electronic device provides an updated knowledge graph based on call content of FIG. 9 and an answer to a user's question, according to an embodiment of the disclosure.
FIG. 11 is a diagram illustrating a situation in which users make a call through an electronic device, according to an embodiment of the disclosure.
FIG. 12 is a diagram illustrating an example in which an electronic device provides an updated knowledge graph based on call content of FIG. 11 and an answer to a user's request, according to an embodiment of the disclosure.
FIG. 13 is a diagram illustrating a process of an electronic device saving a schedule based on a message, according to an embodiment of the disclosure.
FIG. 14 is a diagram illustrating a process of an electronic device performing a search based on chat content and displaying a search result, according to an embodiment of the disclosure.
FIG. 15 is a diagram illustrating a process of an electronic device searching for a schedule based on chat content and displaying a search result, according to an embodiment of the disclosure.
FIG. 16 is a diagram illustrating a process of an electronic device automatically generating an answer based on an image, according to an embodiment of the disclosure.
FIG. 17 is a diagram illustrating a process of an electronic device identifying an entity indicated by a user based on a context of a screen and responding to a user request, according to an embodiment of the disclosure.
FIG. 18 is a diagram illustrating a process of an electronic device identifying an appointment time indicated by a user based on a context of a screen and setting an alarm, according to an embodiment of the disclosure.
FIG. 19 is a diagram illustrating a process of an electronic device identifying and storing information in chunk units based on a context of a screen, according to an embodiment of the disclosure.
FIG. 20 is a diagram illustrating a process of an electronic device controlling an air conditioner based on a user input, according to an embodiment of the disclosure.
FIG. 21 is a diagram illustrating a knowledge graph updated by an electronic device according to an action of a user controlling an air conditioner, according to an embodiment of the disclosure.
FIG. 22 is a diagram illustrating a process of an electronic device generating a knowledge graph when storing a photograph and searching for the photograph according to a user request.
FIGS. 23 and 24 are flowcharts illustrating a method of managing a dynamic database for providing a personalized service, according to embodiments of the disclosure.
FIGS. 25 to 28 are flowcharts illustrating a method of providing a personalized service based on a dynamic database, according to embodiments of the disclosure.
FIG. 29 is a diagram illustrating a situation in which a user makes a call through an electronic device, according to an embodiment of the disclosure.
FIG. 30 is a diagram for describing a process of an electronic device generating a knowledge graph based on user input information (call content of FIG. 29) collected through a call application (app) and storing a schedule based on the knowledge graph, according to an embodiment of the disclosure.
FIG. 31 is a diagram illustrating a situation in which a user makes a call through an electronic device, according to an embodiment of the disclosure.
FIG. 32 is a diagram illustrating a knowledge graph generated by an electronic device based on user input information (call content of FIG. 31) collected through a call app, according to an embodiment of the disclosure.
FIG. 33 is a diagram illustrating a situation in which a user sends congratulatory money to another person through an electronic device upon requesting the person to deliver the money, according to an embodiment of the disclosure.
FIG. 34 is a diagram illustrating a knowledge graph generated by an electronic device based on user input information (remittance information) collected through a mobile banking app, according to an embodiment of the disclosure.
FIG. 35 is a diagram illustrating an example in which an electronic device classifies context information based on reason information included in the context information and stores the classified context information, according to an embodiment of the disclosure.
FIG. 36 is a diagram for explaining a method of an electronic device obtaining context information from user input information collected through a plurality of apps and storing and managing the context information based on reason information included in the context information, according to an embodiment of the disclosure.
FIG. 37 is a diagram illustrating an example in which an electronic device provides a user with a personalized service (to-do list) based on context information connected with respect to reason information, according to an embodiment of the disclosure.
FIG. 38 is a flowchart illustrating a method of managing a dynamic database for providing a personalized service, according to an embodiment of the disclosure.

### MODE FOR THE INVENTION

The embodiments described in the disclosure, and the configurations shown in the drawings, are only examples of embodiments, and various modifications may be made without departing from the scope and spirit of the disclosure.

Throughout the disclosure, the expression "at least one of a, b or c" indicates only a, only b, only c, both a and b, both a and c, both b and c, all of a, b, and c, or variations thereof.

The terms used hereinafter are defined by taking functions described in the disclosure into account and may be changed according to an intent of a user or an operator, or practice, for example. The terms should be interpreted based on the overall description of the disclosure.

In the accompanying drawings, some components may be schematically illustrated. The size of each component may not reflect the actual size. In the drawings, like reference numerals refer to the same or corresponding elements throughout.

Advantages and features of the disclosure and methods of accomplishing the same will be more readily appreciated by referring to the following description of embodiments of the disclosure and the accompanying drawings. The disclosure may be embodied in many different forms and should not be construed as being limited to the embodiments of the disclosure set forth below. Rather, the embodiments of the disclosure are provided so that the disclosure will be made thorough and complete and will fully convey the scope of the disclosure to one of ordinary skill in the art to which the disclosure pertains. An embodiment of the disclosure may be defined by the appended claims. Throughout the disclosure, like reference numerals refer to like elements.

In an embodiment of the disclosure, each block in flowchart illustrations and combinations of blocks in the flowchart illustrations may be performed by computer program instructions. These computer program instructions may be loaded into a processor of a computer or other programmable data processing equipment, and the instructions executed by the processor of the computer or the other programmable data processing equipment may generate a unit for performing functions specified in the flowchart block(s). The computer program instructions may also be stored in a computer-executable or computer-readable memory capable of directing the computer or the other programmable data processing equipment to implement functions in a manner, and the instructions stored in the computer-executable or computer-readable memory are capable of producing an article of manufacture including instructions for performing the functions specified in the flowchart block(s). The computer program instructions may also be loaded into the computer or the other programmable data processing equipment.

Each block of a flowchart may represent a module, segment, or portion of code that includes one or more executable instructions for executing specified logical function(s). In an embodiment of the disclosure, functions mentioned in blocks may occur out of order. For example, two blocks illustrated in succession may be executed substantially simultaneously, or the blocks may sometimes be executed in reverse order depending on functions corresponding thereto.

As used in an embodiment of the disclosure, the term '...unit' refer to a software element or a hardware element such as a field-programmable gate array (FPGA) or an application- specific integrated circuit (ASIC), and may perform a predetermined function. The term '...unit' is not limited to software or hardware. The '...unit' may be configured to be in an addressable storage medium or configured to operate one or more processors. In an embodiment of the disclosure, the term '...unit' may include elements such as software elements, object-oriented software elements, class elements, and task elements, processes, functions, attributes, procedures, sub-routines, segments of program code, drivers, firmware, micro-codes, circuits, data, a database, data structures, tables, arrays, and parameters. Functions provided by a specific element or a specific '...unit' may be combined to reduce the number of elements or may be further divided into additional elements. In an embodiment of the disclosure, a '...unit' may include one or more processors.

The meaning of the terms used herein is described.

The term 'personalized service' may refer to a service for a user determined based on a situation in which the user uses an electronic device. For example, when a user makes a call by using an electronic device, a personalized service that summarizes and saves the call may be provided to the user. For example, when chat messages sent and received by the user through an electronic device include information about a schedule, a personalized service that automatically saves the schedule may be provided to the user. For example, when a user may control a home appliance, for example, when determining based on the user voice input to an electronic device, a personalized service that automatically controls the device may be provided. The electronic device according to embodiments of the disclosure may provide various personalized services such as route search, automatic answer generation, photo search, for example. Terms such as 'customized service' or 'service' may be used instead of 'personalized service'.

The 'user input information' may refer to information included in various types of inputs of a user with respect to an electronic device. The 'user input information' may refer to information collected in a process of a user using an electronic device. The 'user input information' may refer to information input by a user to an electronic device, information based on a usage pattern in which the user uses the electronic device, or information about an action performed by the user through the electronic device. For example, a text input by a user through a command line interface (CLI) of an electronic device may be the user input information. For example, voice information recorded by a user using an electronic device such as a smartphone or text information stored by performing a chat may be the user input information.

The 'user input information' may include not only text or voice directly input by a user, but also text or images (e.g., chat messages or images displayed on a screen, photos included in social networking service (SNS) posts, execution screens of apps, for example) displayed on a screen of an electronic device in a process of a user using the electronic device such as a smartphone.

The 'user input information' may include not only information directly input by a user into an electronic device, but also 'all information obtained by the electronic device based on usage of the electronic device by the user'. For example, when a user chats with another user by using an electronic device, chat messages received from other users through the electronic device as well as chat messages received from the user may be included in the 'user input information'.

The 'user input information' may include a prompt for a user to ask a question about an electronic device or to request the electronic device to perform an action.

According to an embodiment of the disclosure, the 'user input information' may be multimodal information such as text, image, or audio. Terms such as 'input data' or 'device usage information' may be used instead of the 'user input information'.

The term 'context information' may refer to information to perform knowledge graph based reasoning according to various requests of a user. The type of information included in the context information may be determined according to a type of task to be performed through a knowledge graph, the performance of an electronic device (memory capacity, calculation speed, for example) The 'context information' may include explicit information and implicit information that may be determined based on the explicit information.

The term 'parameter efficient fine-tuning (PEFT) model' may refer to a model that has been fine-tuned using a PEFT technique. The PEFT technique is one of the techniques for performing fine-tuning and is an efficient technique capable of reducing computational resources and processing time by updating only some parameters of a pre-trained model instead of updating all parameters thereof. Terms such as 'personalized model' or 'user-- specific AI model' may be used instead of the 'PEFT model'.

Embodiments of the disclosure are described in detail with reference to the drawings.

The disclosure includes a method of managing a dynamic database for providing a personalized service and an electronic device for performing the method. The disclosure includes information stored in the dynamic database, a structure of the dynamic database, and a method of generating and updating the dynamic database.

The disclosure includes a method of providing a personalized service based on a dynamic database and an electronic device for performing the method. The disclosure includes performing knowledge graph based reasoning according to user input information (e.g., voice information recording calls, text information storing chats, prompts asking questions or requesting actions to be performed, for example), and providing a personalized service to a user according to results of inference.

In a process of personalizing an electronic device by using a neural network model such as a large language model (LLM), it may be to manage (generate and update) a database (e.g., knowledge graph) storing related information. The existing knowledge graph that may be used has disadvantages in that the required memory capacity is large and the computational cost is high due to a complex structure and a large amount of stored information.

When the existing knowledge graph is used, there are limitations that real-time update is difficult and it is difficult to implement the existing knowledge graph on-device. Because only explicit information (e.g., information about who, what, where, and when-subject information, event information, location information, and temporal information) is stored in a database such as the existing knowledge graph, there is a limitation to not being able to respond when a user request may use information that is not explicit (e.g., information that is obtainable through inference).

A structure of a database for solving the above problems, a method of managing the database, and a method of performing knowledge graph based reasoning based on such a database are presented.

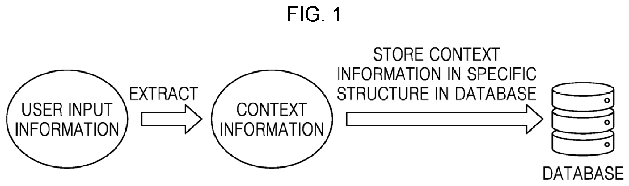

FIG. 1 is a diagram illustrating an overall flow in which an electronic device manages a database based on user input information according to an embodiment of the disclosure. As shown in FIG. 1, according to embodiments of the disclosure, the electronic device may extract context information from the user input information and store the extracted context information in a database in a preset structure (e.g., a subject information, event information, location information, and temporal information, and reason (4W1R) structure to be described below). According to embodiments of the disclosure, the database is simplified, and thus the effect of reducing memory usage and processing time required when managing (generating and updating) the database or performing knowledge graph based reasoning based on the database may be expected. When the database is managed according to embodiments of the disclosure, there are advantages that it may be to implement the database on-device and real-time update is possible.

According to embodiments of the disclosure, because the database may be updated in real time according to added user input information, the database may have characteristics of a 'dynamic database'.

For detailed and explanations, it is assumed that the database is implemented in the form of a knowledge graph widely used in a device personalization process. It is obvious that the embodiments of the disclosure may be applied to various types of databases other than the knowledge graph.

According to embodiments of the disclosure, the electronic device may determine a context from a user input (e.g., various multimodal inputs such as voice, text, image, for example), generate or update a knowledge graph or provide a personalized service based on the determined context.

Information stored in a knowledge graph and a structure of the knowledge graph are first described, and then a process of managing the knowledge graph and providing a personalized service based on the knowledge graph is described.

### 1. Information stored in knowledge graph (database)

As shown in FIG. 1, according to an embodiment of the disclosure, the electronic device may obtain context information from information collected in a process of a user using the electronic device, for example, user input information, and store the context information in the knowledge graph. The electronic device may determine a context of the user input information and obtain the context information from the determined context.

The 'user input information' may refer to information input by the user to the electronic device, information based on a usage pattern in which the user uses the electronic device, or information about an action performed by the user through the electronic device. For example, a text input by the user through a CLI of the electronic device may be the user input information. For example, voice information recording content of a call that the user made by using the electronic device such as a smartphone or text information storing chats may be the user input information. The user input information may be various types of information such as text, image, audio, for example, and thus the electronic device for generating or updating the knowledge graph based on the user input information may support multimodal.

Terms such as, 'context information' may refer to information for performing knowledge graph based reasoning according to various requests of the user, and the type of information included in the context information may be determined according to a type of task to be performed through the knowledge graph, the performance of the electronic device (memory capacity, calculation speed, for example) According to an embodiment of the disclosure, the context information may include explicit information and implicit information that may be determined based on the explicit information. According to an embodiment of the disclosure, the context information may include pieces of information about 4W1R (subject information, event information, location information, and temporal information, Reason) as described below.

According to an embodiment of the disclosure, the explicit information may include information about 'Who', 'What', 'Where', and 'When' (subject information, event information, location information, and temporal information, respectively), and the implicit information may include information about 'reason'. For example, according to an embodiment of the disclosure, the electronic device may store information expressed in the 4W1R (pieces of information in a 4W1R structure) in the knowledge graph.

According to an embodiment of the disclosure, the electronic device may generate a 4W1R vector based on the information extracted or determined based on the user input information, and store the generated 4W1R vector in the knowledge graph. For example, the electronic device may generate the 4W1R vector based on an intention of the user and the context included in the user input information, and the intention of the user may be determined based on the context included in the user input information. In this regard, the 4W1R vector may be a vector including the pieces of information of the 4W1R structure.

According to an embodiment of the disclosure, the electronic device may extract 4W, which is the explicit information, from the user input information, and determine 1R, which is the implicit information. For example, the electronic device may infer the 1R based on the 4W extracted from the user input information. For example, the electronic device may determine the 1R based on the overall context of user input information. For example, upon determining the 1R, the context of the user input information, other than the 4W, may be considered.

According to an embodiment of the disclosure, the 1R may be explicitly included in the user input information. The electronic device may extract the 1R from the user input information.

According to an embodiment of the disclosure, the electronic device may use a generative model such as an LLM upon determining the 1R. For example, the electronic device may obtain the 1R by performing knowledge graph based reasoning based on the user input information.

While no implicit information (1R) is stored in the existing knowledge graph, the implicit information (1R) is stored in the knowledge graph according to an embodiment of the disclosure, which has advantages of capable of outputting more specific and accurate results during knowledge graph based reasoning.

Because only the context information is stored in the knowledge graph according to an embodiment of the disclosure, the knowledge graph is lightened, and thus the electronic device may quickly perform processing, such as searching, generating, merging, or modifying the knowledge graph in real time.

A method, performed by an electronic device, of obtaining context information from user input information will be described by way of an example.

According to an embodiment of the disclosure, when the user makes a call by using the electronic device (e.g., a smartphone), the electronic device may identify a call voice (user input information) to determine the call content and extract the explicit information (4W) from the call content. The electronic device may extract information about who the user makes an appointment with, where an appointment place is, what an appointment time is, for example. The electronic device may extract the explicit information from the call content.

According to an embodiment of the disclosure, the electronic device may determine the implicit information (1R) based on the overall context of the call content. For example, the electronic device may determine information about why the user made an appointment, for example, what the purpose or reason of the appointment is. The electronic device may determine the 1R based on the 4W extracted from the call content, or may determine the 1R in consideration of the overall context of the call content.

The information stored in the knowledge graph according to an embodiment of the disclosure has been described above. The structure of the knowledge graph according to an embodiment of the disclosure will be described.

### 2. Structure of knowledge graph (database)

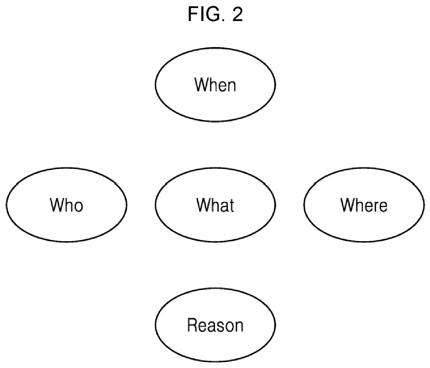

FIG. 2 is a diagram illustrating a structure of a 4W1R-based knowledge graph according to an embodiment of the disclosure. Referring to FIG. 2, the knowledge graph may include only nodes without edges. The five nodes included in the knowledge graph may correspond to subject information, event information, location information, and temporal information, and Reason, respectively. For example, information of subject information, event information, location information, and temporal information, and reason may be stored in the nodes of the knowledge graph, respectively. Locations of the respective nodes may be changed in various ways differently from that shown in FIG. 2. An attribute may be stored in at least one of the nodes included in the knowledge graph. A method of storing an attribute in a node will be described in detail below in an example in which a device (a home appliance, for example) is controlled.

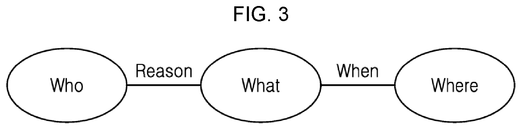

The knowledge graph shown in FIG. 2 has the structure including only nodes, but unlike this, the knowledge graph may be implemented in a structure including nodes and edges. A knowledge graph of another structure will be described with reference to FIG. 3.

FIG. 3 is a diagram illustrating a structure of a 4W1R-based knowledge graph according to an embodiment of the disclosure. Referring to FIG. 3, the knowledge graph may include edges and nodes, three nodes may correspond to Who, What, and Where, respectively (subject information, event information, and location information), and two edges may correspond to When (temporal information) and Reason, respectively. For example, information of Who, What, and Where (subject information, event information, and location information) may be stored in the nodes of the knowledge graph, respectively, and information of when (temporal information) and reason may be stored in the edges, respectively. Locations of the respective nodes, types of the nodes connected by the edges, for example, may be changed in various ways differently from those shown in FIG. 3. An attribute may be stored in at least one of the nodes and the edges included in the knowledge graph.

An electronic device may obtain context information expressed in the 4W1R from user input information and store the context information in the nodes or edges of the knowledge graph shown in FIG. 2 or 3.

The knowledge graph may be implemented in various structures in addition to the structures shown in FIGS. 2 and 3.

### 3. Management of knowledge graph (database), and provision of personalized service based on knowledge graph

The electronic device according to an embodiment of the disclosure may obtain context information from a context collected based on user input information call, chat, or search, for example), structuralize the obtained context information, and store the structuralized context information in real time in the knowledge graph. The electronic device may perform knowledge graph based reasoning using the knowledge graph generated and provide a personalized service (e.g., call summary, schedule management, health information provision, or device control) by using the knowledge graph.

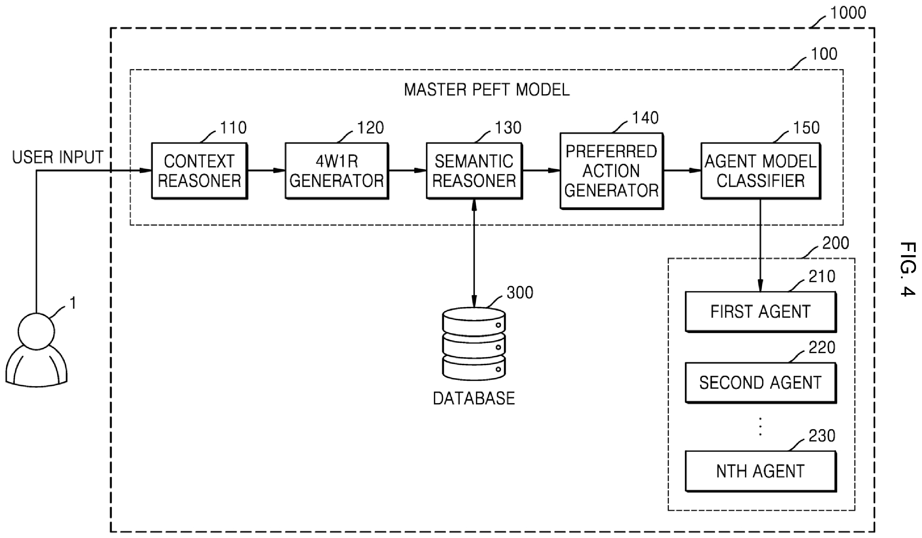

A process of an electronic device generating and updating a knowledge graph based on user input information according to an embodiment of the disclosure will be described with reference to FIG. 4, and then a process of the electronic device providing a personalized service based on the knowledge graph will be described.

### (1) Generating and updating knowledge graph (database)

FIG. 4 is a diagram illustrating modules included in an electronic device according to an embodiment of the disclosure.

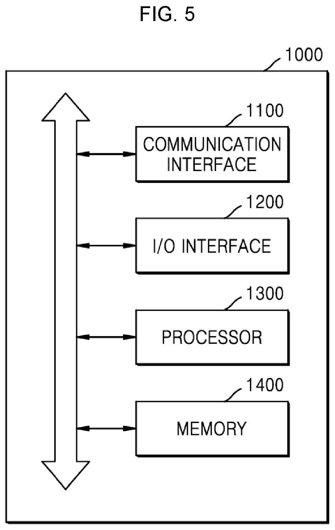

Components 100, 200, and 300 included in an electronic device 1000 of FIG. 4 are classified based on their functions or roles. The components 100, 200, and 300 of the electronic device 1000 of FIG. 4 may be software components implemented by a processor 1300 of the electronic device 1000 executing a program stored in a memory 1400 that is described below with reference to FIG. 5, and may be virtual components having no actual matching hardware devices. Operations performed by the processor 1300 of the electronic device 1000 executing the program or instruction stored in the memory 1400 may be classified into a plurality of groups for each function or purpose, and entities that perform the operations respectively in the classified groups may be expressed as the components of FIG. 4. The operations described as being performed by the components 100, 200, and 300 of the electronic device 1000 shown in FIG. 4 may be considered as actually being performed by the processor 1300 of the electronic device 1000 executing the program or instruction stored in the memory 1400.

FIG. 4 shows that one electronic device 1000 includes all the components 100, 200, and 300, but the disclosure is not limited thereto, and at least some of the components 100, 200, and 300 may be implemented to be included in a separate device, or any one component may be implemented to be included in another component. The components 100, 200, and 300 included in the electronic device 1000 according to an embodiment of the disclosure may be hardware components or software components, and may be implemented in the form of various electronic devices (e.g. one electronic device or a combination of two or more electronic devices).

The electronic device 1000 according to an embodiment of the disclosure may be a terminal (a smartphone, a laptop, or a desktop, for example) of the user 1, but is not limited thereto, and may also be a server that communicates with the terminal of the user 1.

The electronic device 1000 according to an embodiment of the disclosure may include a PEFT model obtained by fine-tuning a pre-trained model according to a PEFT technique. The electronic device 1000 may include a collaborative PEFT model that is fine-tuned to personalize the electronic device 1000 by using a dynamic knowledge graph, and as shown in FIG. 4, may include a master PEFT model 100 and an agent PEFT model 200. The electronic device 1000 according to an embodiment of the disclosure has an advantage in being on-device by using the collaborative PEFT model including a plurality of models.

The master PEFT model 100 may be a model fine-tuned to determine whether it is necessary to perform an action corresponding to a user input, what action to perform, and what information may perform the action. The agent PEFT model 200 may be a model fine-tuned to perform an action based on a result of determination of the master PEFT model 100. The master PEFT model 100 and the agent PEFT model 200 may be referred to as a master model and an agent model, respectively.

The master PEFT model 100 may include a context reasoner 110, a 4W1R generator 120, a semantic reasoner 130, a preferred action generator 140, and an agent model classifier 150. Operations of detailed components included in the master PEFT model 100 will be described below in detail.

The agent PEFT model 200 may include a plurality of agents 210, 220, and 230. The agents 210, 220, and 230 are components for providing services to the user 1 by performing various categories of actions (search, shopping, schedule management, photo search, or SNS post upload, for example). For example, each of the agents 210, 220, and 230 may be a model fine-tuned according to a PEFT technique to perform an action for each category. The agents 210, 220, and 230 may each execute an application (app) of a corresponding category, thereby performing an action corresponding to the intention of the user 1 or an action required by the user 1.

For example, the first agent 210 may execute an app of a search category (an app providing a search function) and perform a necessary search based on user input information. For example, the second agent 220 may execute an app of a shopping category (an app providing an online shopping function) and display a page for purchasing necessary goods on a screen of the electronic device 1000 based on user input information. The agent PEFT model 200 may include more agents for performing various actions.

A dynamic knowledge graph may be stored in a database 300, and the database 300 may be implemented to store information in various structures and forms other than the knowledge graph as described above.

The electronic device 1000 may transmit user input information received from the user 1 to the master PEFT model 100. For example, the electronic device 1000 may transmit voice information recording content of a call made by the user 1 with another person to the master PEFT model 100. The electronic device 1000 may transmit text information input by the user 1 while chatting with another person to the master PEFT model 100. The electronic device 1000 may transmit an image displayed on the screen to the master PEFT model 100.

According to an embodiment of the disclosure, the electronic device 1000 may extract voice information, text information, or image information, for example, from a user input by using a content capture service (CCS) and transmit the extracted information to the master PEFT model 100 as user input information. The electronic device 1000 may extract voice information, text information, or image information, for example, from a user input by using an on-device LLM such as a multimodal encoder and transmit the extracted information to the master PEFT model 100.

The context reasoner 110 may determine whether to perform an action corresponding to the user input information. The context reasoner 110 may determine what action to perform based on a context of the user input information. The context reasoner 110 may understand the context of the user input information, and determine, based on a result of the understanding, whether to perform actions such as generating or updating a knowledge graph, executing an app, and controlling a device. For example, the action corresponding to the user input information may refer to an action of generating or updating a knowledge graph. The action corresponding to the user input information may refer to an action of processing a request of the user 1 (e.g., answer to a question) based on a knowledge graph. The action corresponding to the user input information may refer to an action such as executing an app to search for a location, moving to a page for purchasing goods, saving or changing a schedule, uploading an SNS post, or searching for a photo. The action corresponding to the user input information may refer to an action of controlling a home appliance, such as adjusting a set temperature of an air conditioner.

For example, the context reasoner 110 may determine that generation or update of the knowledge graph is necessary when a content of a call or a chat of the user 1 includes information that may be reflected in the knowledge graph. For example, the context reasoner 110 may determine that execution of the app may be performed for searching or shopping based on information included in the content of the call or the chat of the user 1. The context reasoner 110 may determine, for example, that control of the home appliance is necessary as a result of analyzing a voice command of the user 1. Embodiments will be described in detail below.

When the context reasoned 110 determines to perform the action corresponding to the user input information, the context reasoner 110 may request the 4W1R generator 120 to generate a 4W1R vector while transmitting the user input information or context information extracted from the user input information to the 4W1R generator 120. The 4W1R vector may generate or update a knowledge graph, execute an app, or control a device, as described below. The '4W1R vector' is a vector including context information of a 4W1R structure extracted from the user input information. For example, the 4W1R vector is obtained by performing embedding transformation on the context information expressed in the 4W1R. A method of generating the 4W1R vector is described in detail with respect to the 4W1R generator 120 below.

When the context reasoner 110 determines not to perform the action corresponding to the user input information, the context reasoner 110 may end the process by stopping the execution of the master PEFT model 100.

The 4W1R generator 120 may generate the 4W1R vector based on the context information obtained from the user input information. For example, the 4W1R generator 120 may obtain the context information expressed in the 4W1R structure based on the intention of the user 1 and the context extracted or determined based on the user input information, and generate the 4W1R vector by using the obtained context information. According to an embodiment, the 4W1R generator 120 may summarize the user input information, obtain the context information from the summarized information, and generate the 4W1R vector by using the obtained context information.

The 4W1R generator 120 may receive the context information from the context reasoner 110 or obtain the context information from the user input information received from the context reasoner 110.

The 4W1R generator 120 may perform the 4W1R vector by tokenizing the context information according to the 4W1R structure and performing embedding transformation on tokens obtained as a result. The 4W1R generator 120 may extract information corresponding to each Who, What, Where, When (subject information, event information, location information, and temporal information, respectively), and Reason (reason information) from the context information, separate the extracted information into a plurality of tokens, and perform embedding transformation on the separated tokens.

The 4W1R generator 120 may not obtain part of the information corresponding to the 4W1R. For example, the pieces of information corresponding to at least one of Who, What, Where, When (subject information, event information, location information, and temporal information, respectively), or Reason (reason information) may not be included in the context information. The 4W1R generator 120 may generate the 4W1R vector while leaving the information that has not been obtained in a blank state. Because a default value is predetermined with respect to at least one of the 4W1R, the 4W1R generator 120 may generate the 4W1R vector by applying the default value to the information not included in the context information.

The semantic reasoner 130 may determine whether it is necessary to generate or update the knowledge graph based on the 4W1R vector. When the semantic reasoner 130 determines to generate or update the knowledge graph as a result of determination, the semantic reasoner 130 may generate or update the knowledge graph based on the 4W1R vector.

The semantic reasoner 130 may determine whether it is necessary to generate or update the knowledge graph by comparing the information included in the 4W1R vector received from the 4W1R generator 120 with information included in the knowledge graph previously stored in the database 300. The semantic reasoner 130 may check whether an event in the same context as an event included in the 4W1R vector is stored in the existing knowledge graph, generate a new knowledge graph when the event in the same context is not stored in the existing knowledge graph, and update the knowledge graph on the information included in the 4W1R vector when the event in the same context is stored in the existing knowledge graph.

According to an embodiment of the disclosure, the semantic reasoner 130 may store the 4W1R vector in the database 300 through vector quantization. The semantic reasoner 130 may store a codebook generated by clustering 4W1R vectors in the database 300, map the 4W1R vectors to the respective corresponding code indexes, and store the 4W1R vectors in the database 300. The code index refers to an index corresponding to a center point (code vector) of a plurality of clusters included in the codebook.

The semantic reasoner 130 may store the 4W1R vector in the database 300 as it is without quantizing the 4W1R vector. However, when the semantic reasoner 130 stores the 4W1R vector in the knowledge graph by using vector quantization, storage space may be saved, and the amount of computation that may be processed when generating and updating the knowledge graph may be reduced.

According to an embodiment of the disclosure, the semantic reasoner 130 may classify the context information based on reason information (e.g., 1R) included in the context information (e.g., information included in the 4W1R vector) and store the classified context information in the database 300. For example, the semantic reasoner 130 may connect the context information to at least one other piece of context information previously stored in the database 300 with respect to the reason information and store the connected context information in the database 300. When first reason information is included in first context information obtained from the user input information, and second context information including second reason information is already stored in the database 300, the semantic reasoner 130 may compare the first reason information with the second reason information, and when the first reason information and the second reason information correspond to each other, connect the first context information to the second context information and store the connected context information in the database 300.

The reason information included in the context information may include information about the reason for an event corresponding to the context information. The reason information may be determined based on the user input information corresponding to the context information. The context information may include explicit information (e.g., 4W) and implicit information (e.g., 1R), and the implicit information may include the reason information. An example of the reason information will be described below in detail with reference to the drawings.

When the semantic reasoner 130 classifies the context information based on the reason information and stores the classified context information in the database 300, the context information obtained from user input information collected through various apps installed in the electronic device 1000 may be connected to each other and stored. As a result, the electronic device 1000 may provide a personalized service to a user in consideration of the context information connected to each other. For example, the electronic device 1000 may provide a personalized service such as processing a user request or responding to a user question based on a result of sharing information between a plurality of apps.

### (2) Service provision and device control based on knowledge graphs (database)

The semantic reasoner 130 may determine whether to perform an action such as app execution or device control based on the knowledge graph stored in the database 300. The knowledge graph stored in the database 300 may be generated or updated based on the 4W1R vector received from the 4W1R generator 120 as described above. The semantic reasoner 130 may determine whether to perform the action such as app execution or device control based on a result of comparing the information included in the 4W1R vector received from the 4W1R generator 120 with the information included in the knowledge graph stored in the database 300.

In summary, the semantic reasoner 130 may determine whether to perform the action such as app execution or device control based on at least one of the 4W1R vector received from the 4W1R generator 120 or the knowledge graph stored in the database 300.

As a result of the determination, when the action is to be performed, such as app execution or device control, the semantic reasoner 130 may request the preferred action generator 140 to perform the necessary action.

The semantic reasoner 130 may determine whether to perform an action (e.g., search, shopping, schedule management, photo search, or SNS post upload, for example) based on the characteristics and content of the information included in the 4W1R vector and the knowledge graph. For example, the semantic reasoner 130 may determine that a calendar app may be executed and schedule may be saved when information about a new schedule (appointment) that is not included in the knowledge graph is included in the 4W1R vector. The semantic reasoner 130 may determine, for example, that an online shopping app is to be executed, and that goods are to be purchased when the 4W1R vector or the knowledge graph includes content that indicates purchase of the item. When the semantic reasoned 130 determines to execute an app for search, shopping, schedule management, photo search, or SNS post upload, for example, the semantic reasoner 130 may request the preferred action generator 140 to perform the necessary action.

The semantic reasoner 130 may control a home appliance such as an air conditioner based on the 4W1R vector received from the 4W1R generator 120 and the knowledge graph stored in the database 300. For example, when the user 1 determines that the present temperature is hot based on the information included in the 4W1R vector, the semantic reasoner 130 may turn on the air conditioner and adjust the set temperature based on the information contained in the knowledge graph.

According to an embodiment of the disclosure, a representative 4W1R vector related to device control may be stored in the knowledge graph of the database 300, and the semantic reasoner 130 may control a device based on the representative 4W1R vector. The 'representative 4W1R vector' may refer to a vector including information for controlling a device, and a representative 4W1R vector corresponding to each device may exist. For example, when the user 1 usually adjusted the set temperature of the air conditioner to 24 degrees, a representative 4W1R vector corresponding to the air conditioner may include information that the set temperature of the air conditioner may be adjusted to 24 degrees.

The preferred action generator 140 may determine whether there is a preferred action of the user 1 in relation to the action requested from the semantic reasoner 130. The preferred action of the user 1 may mean a type of an action preferred by the user 1 for each category. For example, when the user 1 prefers to use app A when searching, the preferred action of the user 1 corresponding to the category of search may be 'execution of app A '. A preferred action corresponding to each category may exist.

When the preferred action of the user 1 does not exist as a result of determination, the preferred action generator 140 may execute or recommend an appropriate app for performing the requested action (e.g., recommend a shopping app when the user 1 is to purchase goods).

When the preferred action of the user 1 exists as a result of determination, the preferred action generator 140 may request the agent model classifier 150 to perform the preferred action. For example, the preferred action generator 140 may generate a deeplink for executing an app frequently used by the user 1 and transmit the deeplink to the agent model classifier 150. In this regard, the deeplink for executing an app frequently used by the user 1 may be referred to as a 'preferred deeplink'. The preferred action generator 140 may transmit information about the preferred action of the user 1 to the agent model classifier 150.

The agent model classifier 150 may select an agent for performing the preferred action of the user 1, and allow the selected agent to perform the preferred action. For example, the agent model classifier 150 may select at least one of the agents 210, 220, and 230 with respect to various categories included in the agent PEFT model 200 based on information about the preferred deeplink or the preferred action received from the preferred action generator 140. The selected agent may execute the app preferred by the user 1 and perform the necessary action through the information about the preferred deeplink or the preferred action.

Corresponding categories may respectively exist in the agents 210, 220, and 230 included in the agent PEFT model 200, and the agent model classifier 150 may select an agent in a category corresponding to the preferred deeplink or the preferred action. For example, when the preferred deeplink or the preferred action is for search, the agent model classifier 150 may select an agent in a search category.

The operations of the semantic reasoner 130, the preferred action generator 140, the agent model classifier 150, and the agent PEFT model 200 will be described in detail by way of embodiments of the disclosure as follows.

According to a first embodiment of the disclosure, when the semantic reasoner 130 determines that a search for a location is necessary and requests the preferred action generator 140 to search for the location, the preferred action generator 140 may determine whether a preferred action of the user 1 related to search exists. When the user 1 has used app A frequently while searching before, the preferred action generator 140 may determine execution of app A as the preferred action of the user 1, generate a preferred deeplink for executing app A, and transmit the preferred deeplink to the agent model classifier 150. The agent model classifier 150 may select the first agent 210 in a search category based on the received preferred deeplink. The first agent 210 may execute app A through the preferred deeplink and search for the location in app A.

According to a second embodiment of the disclosure, when the semantic reasoner 130 determines that it is necessary to purchase goods and requests the preferred action generator 140 to purchase the goods, the preferred action generator 140 may determine whether a preferred action of the user 1 related to shopping exists. When the user 1 has used app B frequently while shopping before, the preferred action generator 140 may determine execution of app B as the preferred action of the user 1, generate a preferred deeplink for executing app B, and transmit the preferred deeplink to the agent model classifier 150. The agent model classifier 150 may select the second agent 220 in a shopping category based on the received preferred deeplink. The second agent 220 may execute app B through the preferred deeplink and display a page for purchasing goods from app B on a screen.

The results of the electronic device performing the operation according to the process described above may be stored in the database 300. User preferences determined while performing the operation several times may be stored in the database 300 and referred to when performing a next operation.

### 4. Hardware components of electronic device

FIG. 5 is a diagram illustrating hardware components included in an electronic device according to an embodiment of the disclosure. Referring to FIG. 5, the electronic device 1000 according to an embodiment may include a communication interface 1100, an input/output (I/O) interface 1200, the processor 1300, and the memory 1400. The components of the electronic device 1000 are not limited to the above-described examples, and the electronic device 1000 may include more components or fewer components than the above-described components. Some or all of the communication interface 1100, the I/O interface 1200, the processor 1300, and the memory 1400 may be implemented in the form of a single chip.

The communication interface 1100 is a component for transmitting and receiving signals (control commands, or data, for example) to and from an external device by wired or wirelessly, and may be implemented to include a communication chipset supporting various communication protocols. The communication interface 1100 may receive a signal from the outside and output the signal to the processor 1300, or transmit the signal output from the processor 1300 to the outside. The electronic device 1000 may communicate with external devices through the communication interface 1100.

The I/O interface 1200 may include an input interface (a touch screen, a keyboard, or a microphone, for example) for receiving a command or information from the user 1, and an output interface (a display panel, or a speaker, for example) for displaying a result of execution of an operation according to the command of the user 1 or a status of the electronic device 1000. According to an embodiment of the disclosure, the electronic device 1000 may receive an input from the user 1 through the I/O interface 1200, and when the operation is completed, the result (a location search result, for example) of execution of the operation through the I/O interface 1200.

The processor 1300 is a component for controlling a series of processes to cause the electronic device 1000 to operate according to embodiments of the disclosure described below, and may be configured as one or a plurality of processors. The one or plurality of processors included in the processor 1300 may be circuitry, such as a system on chip (SoC), or an integrated circuit (IC), for example. At least one processor included in the processor 1300 may include processing circuitry. The at least one processor included in the processor 1300 may execute instructions stored in the memory, individually or collectively. The one or plurality of processors included in the processor 1300 may be general purpose processors such as a central processing unit (CPU), a microprocessor unit (MPU), an application processor (AP), a digital signal processor (DSP), dedicated graphics processors such as a graphics processing unit (GPU) and a vision processing unit (VPU), dedicated AI processors such as a neural processing unit (NPU), or dedicated communication processors such as a communication processor (CP). When the one or plurality of processors included in the processor 1300 are dedicated AI processors, the corresponding AI dedicated processors may be designed in a hardware structure for processing a AI model.

The processor 1300 may write data to the memory 1400 or read data stored in the memory 1400, and may execute a program or at least one instruction stored in the memory 1400 to process data according to predefined operation rules or AI models. The processor 1300 may perform operations described according to embodiments of the disclosure described below, and operations described in the disclosure as being performed by the electronic device 1000 or the modules 100, 200, and 300 included in the electronic device 1000 may be considered as being performed by the processor 1300 unless otherwise specified.

The memory 1400 is a component for storing various programs or data, and may be configured as a storage medium, such as read-only memory (ROM), random access memory (RAM), a hard disk, compact disc ROM (CD-ROM), or a digital video disc (DVD), for example, or a combination of storage media. The memory 1400 may not exist separately but may be configured to be included in the processor 1300. The memory 1400 may be configured as volatile memory, non-volatile memory, or a combination of volatile memory and non-volatile memory. The memory 1400 may store a program or at least one instruction for performing operations according to embodiments of the disclosure described below. The memory 1400 may provide stored data to the processor 1300 according to a request from the processor 1300.

Embodiments in which the electronic device 1000 manages a knowledge graph according to a user input and provides a service or controls a device based on the knowledge graph will be described. When necessary, operations performed by the electronic device 1000 by using the components of the electronic device 1000 shown in FIG. 4 will be described.

### 5. Description of embodiments

(1) Example in which a call (chat) content is summarized and saved.

When the electronic device 1000 according to an embodiment of the disclosure is a device (e.g., smartphone) that supports call and chat (message) functions, the electronic device 1000 may summarize and save the call and chat content of a user, and generate or update a knowledge graph accordingly.

According to an embodiment of the disclosure, the electronic device 1000 may summarize the call content as several sentences each time a call ends, and display the summarized content together with information (e.g., a name or a phone number of the other party) for identifying the other party on a call list. The electronic device 1000 may extract a keyword from the summarized call content and display the extracted keyword on the call list. The electronic device 1000 may generate a title corresponding to the call content and display the title on the call list.

The electronic device 1000 may generate or update the knowledge graph by reflecting the summarized call content or the keyword extracted from the call content. For example, the electronic device 1000 may obtain context information of a 4W1R structure from the summarized call content or the extracted keyword, and store the obtained context information in the knowledge graph.

Electronic device 1000 may perform a necessary action when an action such as storing a schedule is to be performed based on the call content. For example, when the context information obtained from the call content includes information about a new schedule (e.g., generation of a new meeting appointment or changing the location or time of the existing meeting appointment), the electronic device 1000 may store the information about the new schedule in the knowledge graph and save the new schedule in a calendar app.

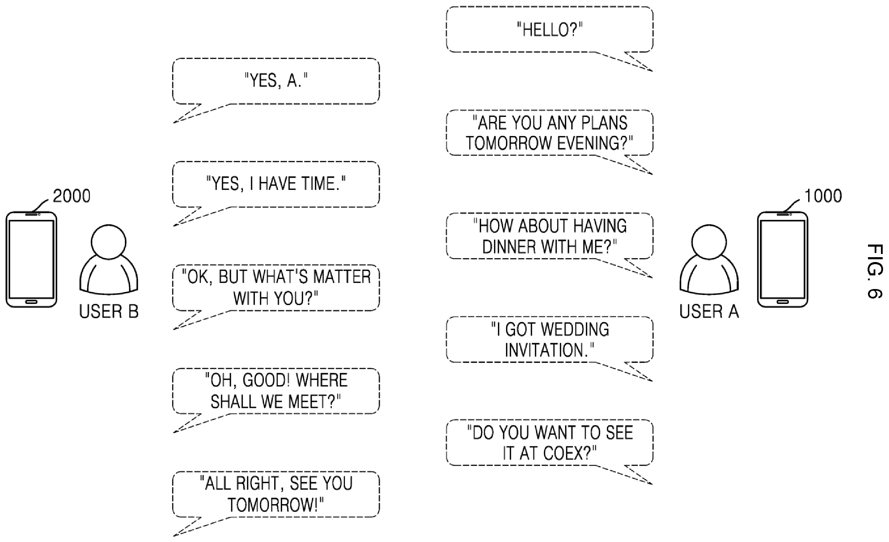

An example in which the electronic device 1000 manages a knowledge graph based on a call content and saves a schedule will be described with reference to FIGS. 6 to 12.

FIG. 6 is a diagram illustrating a situation in which users make a call through electronic devices according to an embodiment of the disclosure. Referring to FIG. 6, user A and user B make the call by using their respective electronic devices 1000 and 2000. FIG. 6 shows content of the call between user A and user B.

The electronic device 1000 may obtain context information from the call content of user A and user B, and generate or update a knowledge graph based on the obtained context information. The electronic device 1000 may save a schedule in a calendar app based on the updated knowledge graph.

The electronic device 1000 may obtain the call content of user A and user B as user input information. For example, the electronic device 1000 may record and save voices that user A and the user B make the call. The electronic device 1000 may identify voices that user A and the user B make the call in real time and save the voices as text information. The electronic device 1000 may obtain the call content of user A and user B as the user input information through various methods.

The electronic device 1000 may obtain the context information from the obtained user input information (call content) and store the obtained context information in the knowledge graph. According to an embodiment, the electronic device 1000 may obtain context information of a 4W1R structure from the call content.

Referring to the call content shown in FIG. 6, user A is conversing with user B to make a meeting appointment, and mentions a meeting place and time, and the reason for a meeting. Referring to the call, it may be seen that user A and user B decided to meet at COEX tomorrow evening. The electronic device 1000 may determine the reason why user A meets user B in consideration of the overall context of the call content. Because user A said, "I got a wedding invitation," the electronic device 1000 may know that user A meets user B and gives user B the wedding invitation. The electronic device 1000 may obtain the context information of the 4W1R structure from the call content as follows.
Who: User A and User B
What: Meeting
Where: COEX
When: Tomorrow evening
Reason: To give wedding invitation

According to an embodiment of the disclosure, the context reasoner 110 of the electronic device 1000 may summarize the call content, obtain the context information of the 4W1R structure from the summarized call content, and transmit the obtained context information to the 4W1R generator 120. The 4W1R generator 120 may generate a 4W1R vector by performing embedding on the received context information of the 4W1R structure, and transmit the generated 4W1R vector to the semantic reasoner 130. The semantic reasoner 130 may generate a knowledge graph based on the received 4W1R vector.

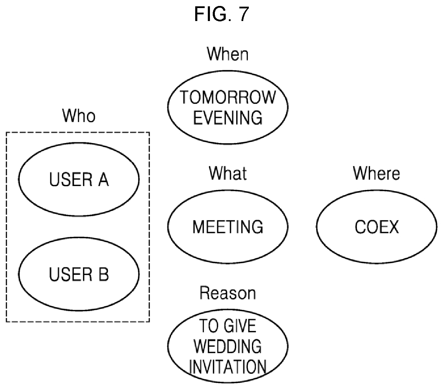

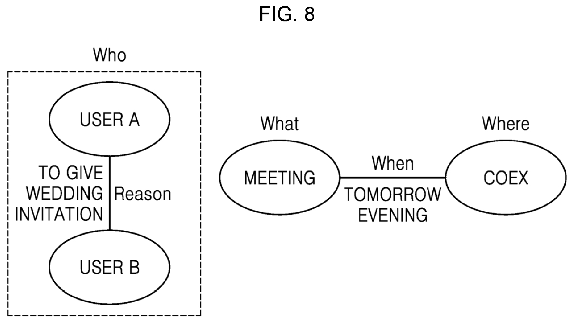

The electronic device 1000 may generate the knowledge graph including 4W1R information. The electronic device 1000 may store 4W1R information in knowledge graphs of various structures, and examples of storing 4W1R information in knowledge graphs of two structures described with reference to FIGS. 2 and 3 are shown in FIGS. 7 and 8.

Referring to FIG. 7, Who (user A and user B) (subject information), What (meeting) (event information), Where (COEX) (location information), When (tomorrow evening) (temporal information), and Reason (to give a wedding invitation) are all expressed as nodes of the knowledge graph, and the knowledge graph does not include edges. A result of storing the 4W1R information obtained from the call content of FIG. 6 in the knowledge graph of the structure described with reference to FIG. 2 is a knowledge graph shown in FIG. 7.

Referring to FIG. 8, in the 4W1R information, Who (user A and user B) (subject information), What (meeting) (event information), Where (COEX) (location information), and When (tomorrow evening) (temporal information) may be expressed as nodes of the knowledge graph, and When (tomorrow evening) and Reason (to give a wedding invitation) may be expressed as edges of the knowledge graph. A result of storing the 4W1R information obtained from the call content of FIG. 6 in the knowledge graph of the structure described with reference to FIG. 3 is a knowledge graph shown in FIG. 8.

After generating the knowledge graph of FIG. 7 or 8, the electronic device 1000 may save a schedule based on the knowledge graph. For example, among agents included in the agent PEFT model 200 of the electronic device 1000, an agent corresponding to a schedule management category may save a new schedule in the calendar app based on the knowledge graph.

The electronic device 1000 is described with respect to the knowledge graph of the structure shown in FIGS. 2 and 7.

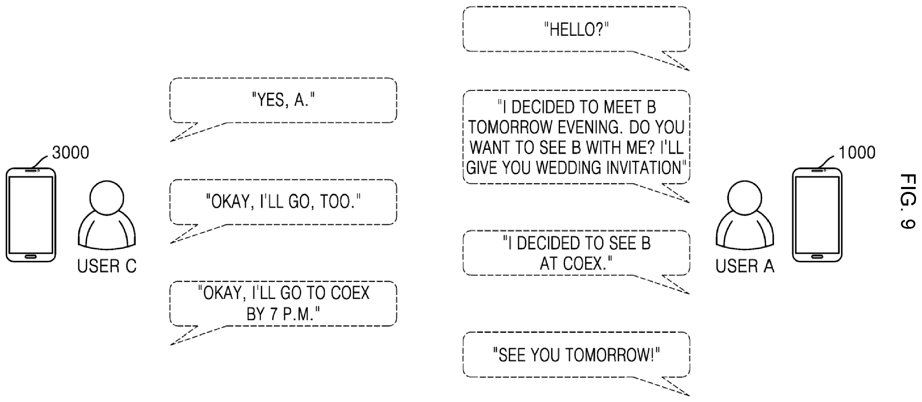

After user A and user B make the call as shown in FIG. 6, a situation in which user A and user C make a call by using their electronic devices 1000 and 3000, respectively, is shown in FIG. 9. FIG. 9 shows content of the call between user A and user C.

The electronic device 1000 may obtain context information from the call content of user A and user C, and update a knowledge graph based on the obtained context information. The electronic device 1000 may save a schedule in a calendar app based on the updated knowledge graph.

A process of the electronic device 1000 obtaining the call content of user A and user C as user input information and obtaining context information of a 4W1R structure from the call content is the same as described above with reference to FIG. 6.

Referring to the call content shown in FIG. 9, user A suggests user C to meet with user B, and mentions a meeting place and time, and the reason for a meeting. Referring to the call content, it may be seen that user A meets user B and user C at COEX on tomorrow evening at 7 p.m., and user A gives user B and user C wedding invitations.

Compared with the call content shown in FIG. 6, pieces of information of Who and When (subject information and temporal information) are updated. The electronic device 1000 may obtain the context information of the 4W1R structure from the call content as follows (the underlined portions indicate updated pieces compared to the existing context information).
Who: User A, User B, and User C
What: Meeting
Where: COEX
When: Tomorrow evening at 7 pm
Reason: To give user B and user C wedding invitations

According to an embodiment of the disclosure, the context reasoner 110 of the electronic device 1000 may summarize the call content, obtain the context information of the 4W1R structure from the summarized call content, and transmit the obtained context information to the 4W1R generator 120. The 4W1R generator 120 may generate a 4W1R vector by performing embedding on the received context information of the 4W1R structure, and transmit the generated 4W1R vector to the semantic reasoner 130.

The semantic reasoner 130 may determine whether to update the knowledge graph based on a result of comparing the received 4W1R vector with the previously generated knowledge graph of FIG. 7. When comparing the 4W1R vector generated based on the call content of FIG. 9 with the knowledge graph of FIG. 7, the semantic reasoner 130 may determine that it is necessary to update the knowledge graph because new information is included in who and when pieces of information (subject information and temporal information, respectively). The semantic reasoner 130 may update the knowledge graph based on the received 4W1R vector.

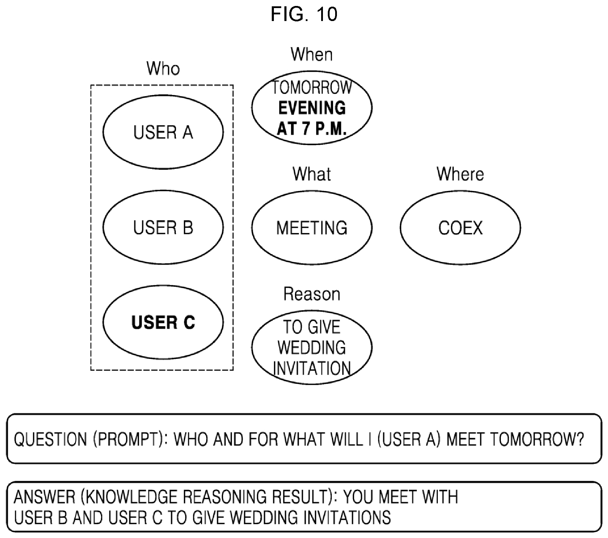

The knowledge graph updated by the electronic device 1000 based on the call content of FIG. 9 is shown in FIG. 10. FIG. 10 shows an example in which the electronic device 1000 answers a question asked by a user.

The semantic reasoner 130 of the electronic device 1000 may add, to the knowledge graph, new information not stored in the knowledge graph among information included in the 4W1R vector received from the 4W1R generator 120. Referring to FIG. 10, the electronic device 1000 added 'user C' to a node corresponding to Who (subject information) and '7 pm' to a node corresponding to When (temporal information) among nodes of the knowledge graph. Only the latest pieces of information about all pieces of 4W1R information may be stored in the updated knowledge graph as above.

According to an embodiment of the disclosure, the electronic device 1000 may reduce the weight of the knowledge graph by storing only the latest pieces of information in each node of the knowledge graph and not storing unnecessary existing information (e.g., an appointment time before change in a situation where the appointment time has changed) in the knowledge graph. The electronic device 1000 according to an embodiment of the disclosure has the advantages of generating or updating a knowledge graph in real time and providing a service to a user in real time based on a result of performing knowledge graph based reasoning based on the knowledge graph.

The electronic device 1000 may update the schedule based on the knowledge graph after updating the knowledge graph as shown in FIG. 10. For example, among agents included in the agent PEFT model 200 of the electronic device 1000, an agent corresponding to a schedule management category may update a schedule saved in the calendar app based on the knowledge graph.

When a user inputs a question as a prompt, the electronic device 1000 may perform knowledge graph based reasoning based on the knowledge graph and provide an answer according to a result of knowledge graph based reasoning. For example, when user A inputs a voice asking a question to the electronic device 1000, the electronic device 1000 may determine an answer to the question of user A based on the knowledge graph, and output the determined answer in a voice or display the determined answer as a text on a screen.

As shown in FIG. 10, when user A inputs a question "Who and for what will I meet tomorrow?" to the electronic device 1000, the electronic device 1000 may perform knowledge graph based reasoning based on the knowledge graph stored in the database 300 and generate an answer based on a result of knowledge graph based reasoning.

The electronic device 1000 may check information stored in a node corresponding to Who (subject information) and a node corresponding to Reason in the knowledge graph in order to generate an answer to the question of user A. Based on a result of checking the information stored in the knowledge graph, the electronic device 1000 may generate an answer that "You meet with user B and user C to give wedding invitations."

Because only explicit information (information corresponding to 4W) is stored in the existing knowledge graph, there is a limitation that the electronic device 1000 may not respond appropriately in generating an answer to a question when implicit information is not determined. For example, when the electronic device 1000 had saved the call content of user A in the existing knowledge graph, and the question shown in FIG. 10 was input, the electronic device 1000 might not have generated an answer to "for what" user A meets with user B and user C.

In the embodiments of the disclosure shown in FIGS. 6 to 12, information about Reason may be relatively easily determined in the call contents between users, and in some cases, information about Reason may be obtained only by determining the overall context of the call content and determining based on the determined context. According to an embodiment of the disclosure, the electronic device 1000 may obtain the information about Reason from the call content by using a neural network model such as LLM. The information about Reason may be classified as implicit information among the context information.

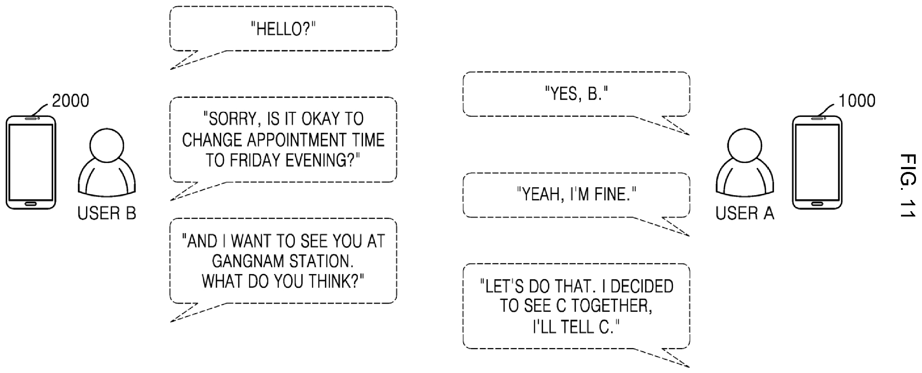

After user A and user C make the call as shown in FIG. 9, a situation in which user A and user B make the call by using their electronic devices 1000 and 2000 respectively is shown in FIG. 11. FIG. 11 shows content of the call between user A and user B.

A process of the electronic device 1000 obtaining context information of a 4W1R structure from the call content of user A and user B is the same as described above with reference to FIG. 6.

Referring to the call content shown in FIG. 11, user B suggests user A to change a meeting time and place, and user A agrees thereto. Referring to the call content, it may be seen that the meeting time between user A and user B has been changed to Friday evening, and the meeting place has been changed to Gangnam Station.

Compared with the call content shown in FIG. 9, pieces of information including Where and When has been updated (location information and temporal information, respectively). The electronic device 1000 may obtain context information of a 4W1R structure from the call content as follows (the underlined portions indicate updated pieces compared to the existing context information).
Who: User A, User B, and User C
What: Meeting
Where: Gangnam Station
When: Friday at 7 pm
Reason: To give user B and user C wedding invitations

According to an embodiment of the disclosure, the context reasoner 110 of the electronic device 1000 may summarize the call content, obtain the context information of the 4W1R structure from the summarized call content, and transmit the obtained context information to the 4W1R generator 120. The 4W1R generator 120 may generate a 4W1R vector by performing embedding on the received context information of the 4W1R structure, and transmit the generated 4W1R vector to the semantic reasoner 130.

The semantic reasoner 130 may determine whether it is necessary to update the knowledge graph based on a result of comparing the received 4W1R vector with the previously generated knowledge graph of FIG. 10. When comparing the 4W1R vector generated based on the call content of FIG. 11 with the knowledge graph of FIG. 10, the semantic reasoner 130 may determine that it is to update the knowledge graph because new information is included in pieces of information including Where and When (location information and temporal information, respectively). The semantic reasoner 130 may update the knowledge graph based on the received 4W1R vector.

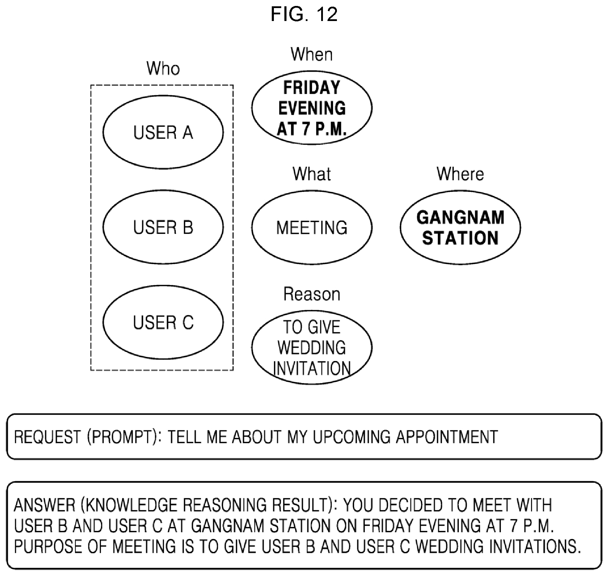

The knowledge graph updated by the electronic device 1000 based on the call content of FIG. 11 is shown in FIG. 12. FIG. 12 shows an example in which the electronic device 1000 answers a question asked by a user.

The semantic reasoner 130 of the electronic device 1000 may add, to the knowledge graph, new information not stored in the knowledge graph among information included in the 4W1R vector received from the 4W1R generator 120. Referring to FIG. 12, the electronic device 1000 changed information of a node corresponding to When to 'Friday 7 pm' and changed information of a node corresponding to Where to 'Gangnam Station' among nodes of the knowledge graph. Only the latest pieces of information about all pieces of 4W1R information may be stored in the updated knowledge graph as above.

The electronic device 1000 may update the schedule based on the knowledge graph after updating the knowledge graph as shown in FIG. 12. For example, among agents included in the agent PEFT model 200 of the electronic device 1000, an agent corresponding to a schedule management category may update a schedule saved in the calendar app based on the knowledge graph.

When a user inputs a request as a prompt, the electronic device 1000 may perform knowledge graph based reasoning based on the knowledge graph and provide an answer according to a result of knowledge graph based reasoning.

As shown in FIG. 12, when user A inputs a request "Tell me about my upcoming appointment" to the electronic device 1000, the electronic device 1000 may perform knowledge graph based reasoning based on the knowledge graph stored in the database 300 and generate an answer based on a result of knowledge graph based reasoning.

The electronic device 1000 may check information stored in each of nodes corresponding to Who, What, Where, When (subject information, event information, location information, and temporal information), and Reason in the knowledge graph in order to generate an answer to the request of user A. Based on a result of checking the information stored in the knowledge graph, the electronic device 1000 may generate an answer that "You decided to meet with user B and user C at Gangnam Station on Friday evening at 7 p.m. The purpose of the meeting is to give user B and user C wedding invitations."

The situation in which users make calls by using electronic devices has been described above as an example, but the process described above may be applied in the same manner to a situation in which users chat by using electronic devices. For example, the electronic device 1000 may obtain context information from a chat content of a user and generate or update a knowledge graph based on the context information.

(2) Example in which a schedule is automatically saved based on a message.

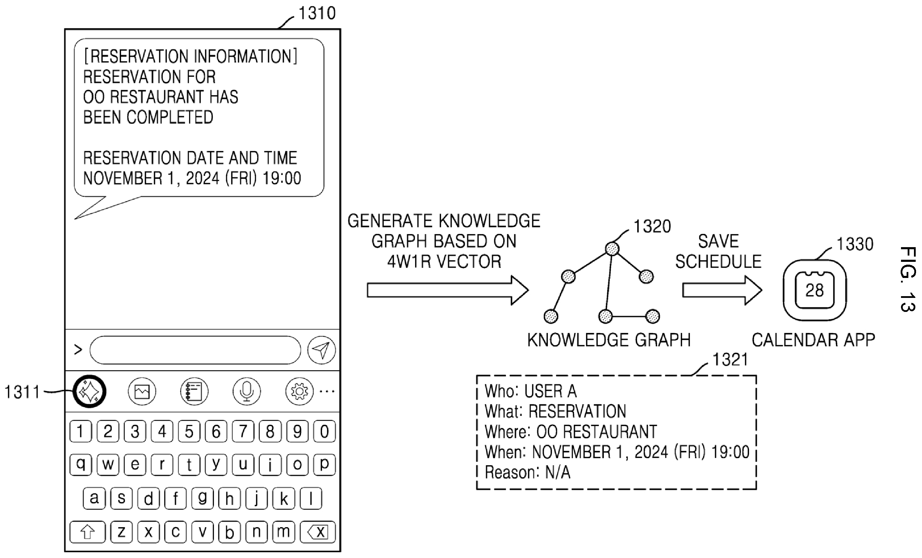

According to an embodiment of the disclosure, the electronic device 1000 may perform a necessary action based on a received message. For example, the electronic device 1000 may save a reservation schedule in a calendar app when the message includes information about reserving a restaurant. FIG. 13 is a diagram illustrating a process of an electronic device saving a schedule based on a message according to an embodiment of the disclosure. A first screen 1310 of FIG. 13 may be displayed on the I/O interface 1200 of the electronic device 1000.

Referring to FIG. 13, a received message is displayed on the first screen 1310, and reservation information with respect to an OO restaurant is included in the message.

When the electronic device 1000 receives the message, the electronic device 1000 may automatically update a knowledge graph based on the message and save the schedule in a calendar app. The electronic device 1000 may update the knowledge graph and save the schedule in the calendar app when there is a user request after receiving the message. For example, as shown in FIG. 13, a button 1311 for supporting an AI function (hereinafter referred to as 'AI button') is displayed on the first screen 1310, and when a user selects the AI button 1311 while the message is displayed on a screen, the electronic device 1000 may save the schedule based on the message.

The electronic device 1000 may obtain context information 1321 having a 4W1R structure from the message (user input information) displayed on the first screen 1310 as follows.
Who: User A
What: Reservation
Where: OO Restaurant
When: November 1, 2024 (Fri) 19:00
Reason: N/A

The electronic device 1000 may generate a 4W1R vector based on the context information 1321 of the 4W1R structure, and update a knowledge graph 1320 based on the generated 4W1R vector. Subsequently, the electronic device 1000 may save the schedule in a calendar app 1330 based on the updated knowledge graph 1320.

Actions performed by detailed components of the electronic device 1000 in a process of updating the knowledge graph and storing the schedule based on the message will be described in detail as follows.

The 4W1R generator 120 may generate a 4W1R vector based on the context information 1321 of the 4W1R structure, and the semantic reasoner 130 may update the knowledge graph 1320 stored in the database 300 based on the generated 4W1R vector.

The semantic reasoner 130 may determine whether it is necessary to perform an additional action based on the updated knowledge graph 1320. Because new reservation information has been added to the knowledge graph 1320, the semantic reasoner 130 may determine that it is necessary to update the schedule, and may request the preferred action generator 140 to update the schedule.

The preferred action generator 140 may check whether there is an app frequently used by the user when the user manages the schedule, and when the user has frequently used the calendar app 1330, generate a deeplink for executing the calendar app 1330 and transmit the deeplink to the agent model classifier 150 together with reservation information.

The agent model classifier 150 may select an agent corresponding to a schedule management category from among agents included in the agent PEFT model 200, and transmit a deeplink for executing the calendar app 1330 to the selected agent together with reservation information. The selected agent may execute the calendar app 1330 through the received deeplink and save the schedule based on the reservation information.

When the received message includes the schedule information, the electronic device 1000 automatically saves the schedule in the calendar app 1330, and thus the user may not save the schedule one by one, thereby improving convenience.

(3) Example in which an execution screen of another app is displayed based on a chat content.

According to an embodiment of the disclosure, the electronic device 1000 may perform a necessary action based on the chat content while a user is chatting. For example, the electronic device 1000 may determine which app is executed and what action may be performed based on the chat content, and according to a result of determination, execute the app and perform the action. The electronic device 1000 may display results of executing the app and performing the action to overlap a screen on which chat messages are displayed, thereby allowing the user to check the result of performing the action while continuing chatting.

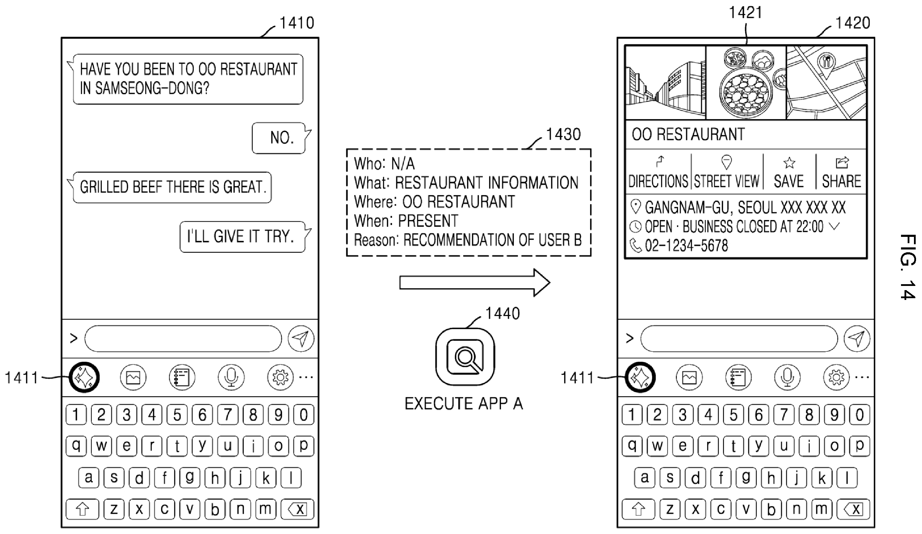

According to an embodiment of the disclosure, when it is determined that it is necessary to search for information as a result of analyzing the chat content of the user, the electronic device 1000 may execute a search app to perform a search and display a search result on the screen. FIG. 14 is a diagram illustrating a process of an electronic device performing a search based on a chat content and displaying a search result according to an embodiment of the disclosure. A first screen 1410 and a second screen 1420 of FIG. 14 may be displayed on the I/O interface 1200 of the electronic device 1000.

Referring to FIG. 14, a chat message exchanged by a user with another user is displayed on the first screen 1410.

The electronic device 1000 may analyze the chat content in real time and perform a search when it is determined that it is necessary. When the user selects an AI button 1411 while the chat message is displayed, the electronic device 1000 may perform a search based on the chat content.

The electronic device 1000 may obtain context information 1430 of a 4W1R structure from the chat content (user input information) displayed on the first screen 1410 as follows.
Who: N/A
What: Restaurant information
Where: OO Restaurant
When: Present
Reason: Recommendation of User B

The electronic device 1000 may generate a 4W1R vector based on the context information 1430 of the 4W1R structure and perform a search based on the generated 4W1R vector. Subsequently, the electronic device 1000 may display a search result 1421 to overlap the chat message like the second screen 1420.

Actions performed by the detailed components of the electronic device 1000 in a process of performing the search based on the chat content will be described in detail as follows.

The 4W1R generator 120 may generate a 4W1R vector based on the context information 1430 of the 4W1R structure, and the semantic reasoner 130 may determine a necessary action based on the generated 4W1R vector. Because the 4W1R vector includes a content that user B recommended OO restaurant, the semantic reasoner 130 may determine an intention of a user that the user wants to check information about recommended OO restaurant, and accordingly determine that it is necessary to search for OO restaurant. The semantic reasoner 130 may request the preferred action generator 140 to search for OO restaurant.

The preferred action generator 140 may check whether there is an app frequently used by the user when the user performs a search, and when the user has previously frequently used an A app 1440 during a search, generate a deeplink for executing the A app 1440 and transmit the deeplink to the agent model classifier 150 together with information for identifying a search target (OO restaurant).

The agent model classifier 150 may select an agent corresponding to a search category from among agents included in the agent PEFT model 200, and transmit the deeplink for executing the app A 1440 to the selected agent together with the information about the search target. The selected agent may execute the app A 1440 through the received deeplink to search for OO restaurant and display a search result 1421 on a screen.

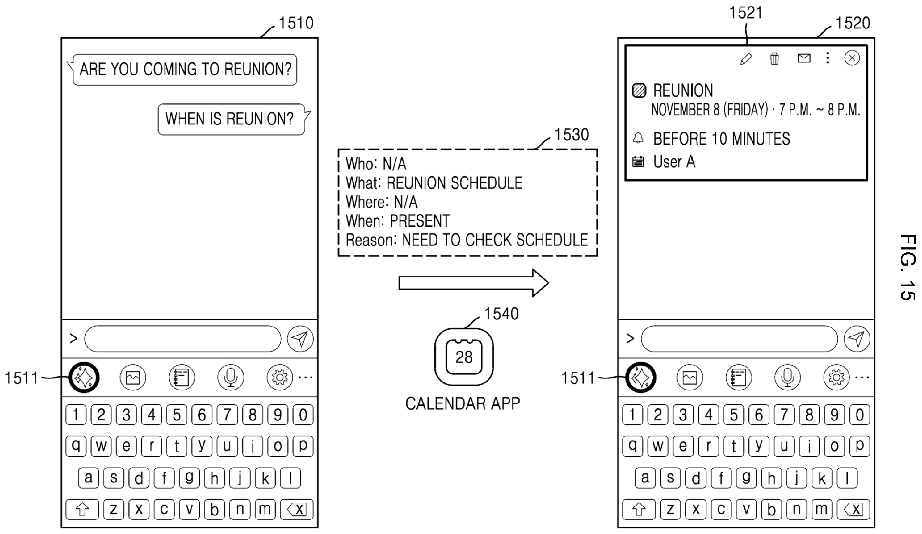

According to an embodiment of the disclosure, when it is determined that a schedule search is necessary as a result of analyzing the chat content of the user, the electronic device 1000 may perform a search and display a search result on the screen. FIG. 15 is a diagram illustrating a process of an electronic device searching for a schedule based on a chat content and displaying a search result according to an embodiment of the disclosure. A first screen 1510 and a second screen 1520 of FIG. 15 may be displayed on the I/O interface 1200 of the electronic device 1000.

Referring to FIG. 15, a chat message exchanged by a user with another user may be displayed on the first screen 1510.

The electronic device 1000 may analyze the chat content in real time and search for a schedule when it is determined that it is necessary. When the user selects an AI button 1511 while the chat message is displayed, the electronic device 1000 may search for a schedule based on the chat content.

The electronic device 1000 may obtain context information 1530 of a 4W1R structure from the chat content (user input information) displayed on the first screen 1510 as follows.
Who: N/A
What: Reunion schedule
Where: N/A
When: Present
Reason: Need to check schedule

The electronic device 1000 may generate a 4W1R vector based on the context information 1530 of the 4W1R structure and search for a schedule based on the generated 4W1R vector. Subsequently, the electronic device 1000 may display a schedule search result 1521 to overlap the chat message like the second screen 1520.

Actions performed by the detailed components of the electronic device 1000 in a process of performing the search based on the chat content will be described in detail as follows.

The 4W1R generator 120 may generate a 4W1R vector based on the context information 1530 of the 4W1R structure, and the semantic reasoner 130 may determine a necessary action based on the generated 4W1R vector. Because the 4W1R vector includes a content that it is necessary to check a reunion schedule, the semantic reasoner 130 may determine that it is necessary to search for the reunion schedule. The semantic reasoner 130 may request the preferred action generator 140 to search for the reunion schedule.

The preferred action generator 140 may check whether there is an app frequently used by the user when the user manages the schedule, and when the user has frequently used a calendar app 1540, generate a deeplink for executing the calendar app 1540 and transmit the deeplink to the agent model classifier 150 together with information for identifying a search target (reunion schedule).

The agent model classifier 150 may select an agent corresponding to a schedule management category from among agents included in the agent PEFT model 200, and transmit the deeplink for executing the calendar app 1540 to the selected agent together with the information for identifying the search target. The selected agent may execute the calendar app 1540 through the received deeplink, search for the reunion schedule, and display a search result 1521 on a screen.

When it is determined that the user wants to search for information or a schedule as a result of determining the context of the chat content, the electronic device 1000 automatically performs a search and provides a result of search, thereby improving the convenience of user.

(4) Example in which an answer, for example, is automatically generated based on a multimodal input.

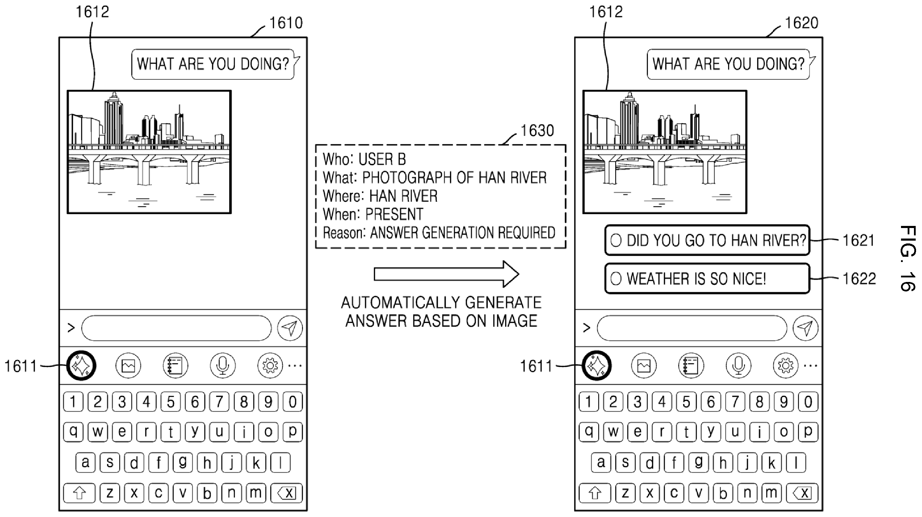

According to an embodiment of the disclosure, the electronic device 1000 may automatically perform an action such as generating an answer based on a multimodal input such as text, image, or audio, for example. For example, when receiving an image from the other party through a chat app, the electronic device 1000 may automatically generate an answer based on the image and recommend the answer to the user. FIG. 16 is a diagram illustrating a process of an electronic device automatically generating an answer based on an image according to an embodiment of the disclosure. A first screen 1610 and a second screen 1620 of FIG. 16 may be displayed on the I/O interface 1200 of the electronic device 1000.

A chat message exchanged by a user with another user is displayed on the first screen 1610 of FIG. 16. Referring to FIG. 16, when the user sends a message "What are you doing?", the other party sends an image 1612 in response.

The electronic device 1000 may analyze the received image 1612 in real time and automatically generate an appropriate answer based on an analysis result. When the user selects the AI button 1611 while the image 1612 is displayed on the screen, the electronic device 1000 may analyze the image 1612 and generate an answer thereto.

The electronic device 1000 may obtain context information 1630 of a 4W1R structure based on the chat content (user input information) displayed on the first screen 1610, and because the other party sent the image 1612 in response to the user sending the message "What are you doing?" on the first screen 1610, the electronic device 1000 may determine that an answer to the image 1612 is necessary. The electronic device 1000 may generate information about a piece of information for Reason (reason information) as 'answer generation required'. The electronic device 1000 may determine that the image 1612 is a photograph of Han River as a result of identifying a background or an object included in the image 1612, generate information of the piece of information for What (event information) as a "Han River photograph", and generate information of the piece of information for Where (location information) as "Han River".

As a result, the electronic device 1000 may obtain context information 1630 of a 4W1R structure from the chat content displayed on the first screen 1610 as follows.
Who: User B
What: Han River photograph
Where: Han River
When: Present
Reason: Answer generation required

The electronic device 1000 may generate a 4W1R vector based on the context information 1630 of the 4W1R structure obtained and generate an answer to the image 1612 based on the 4W1R vector. Because the image 1612 is the photograph of Han River, the electronic device 1000 may generate "Did you go to Han River?" 1621 and "The weather is so nice!" 1622 as answer candidates and display the answer candidates 1621 and 1622 on the second screen 1620. The user may select any one of the answer candidates 1621 and 1622 displayed on the second screen 1620 or may directly write a new answer to respond to the other party.

The electronic device 1000 may generate a 4W1R vector based on a result of analyzing an image displayed on the screen and generate an answer based on the 4W1R vector, thereby generating an answer that corresponds to a background or an object included in the image.

A function of the electronic device 1000 according to an embodiment generating an answer, for example, based on a multimodal input may also be used when automatically generating comments corresponding to SNS posts or automatically writing reviews of purchased goods.

(5) Example in which an entity indicated by a user is identified based on a context of a screen.

According to an embodiment of the disclosure, the electronic device 1000 may accurately identify the entity indicated by the user based on the context of the screen. For example, when the user inputs a question or a request by using a term that is difficult to specify a target for instruction, such as 'here', 'this', or 'that', the electronic device 1000 may determine the target intended by the user by determining the context of the screen and respond to the question or the request.

### 1) Search for route to café that user has searched for

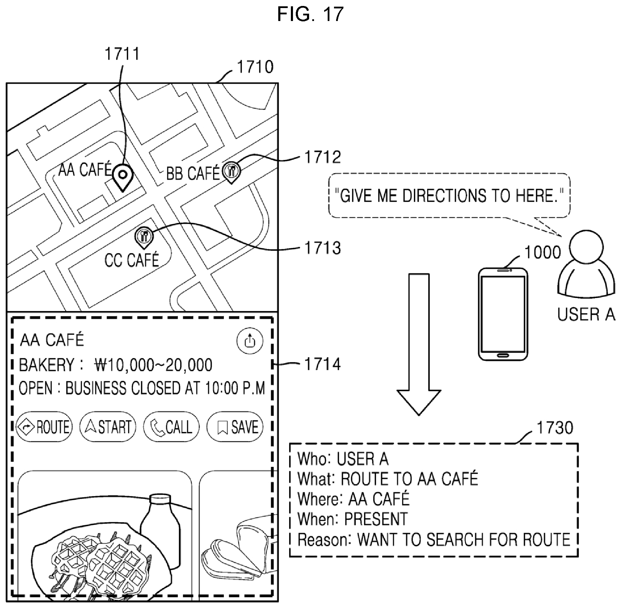

FIG. 17 is a diagram illustrating a process of an electronic device identifying an entity indicated by a user based on a context of a screen and responding to a user request according to an embodiment of the disclosure. A first screen 1710 of FIG. 17 may be displayed on the I/O interface 1200 of the electronic device 1000.

A result of user A searching for a café is displayed on the first screen 1710 of FIG. 17. When user A searches for an AA café through a search app or a map app installed in the electronic device 1000, a location of the AA café, nearby cafés, and detailed information of the AA café may be displayed together as shown in the first screen 1710.

Referring to FIG. 17, a map is displayed on the upper half of the first screen 1710, and locations of an AA café 1711, a BB café 1712, and a CC café 1713 are displayed on the map. Detailed information (business hours, or price range, for example) 1714 about the AA café 1711 is displayed on the lower half of the first screen 1710.

When user A inputs a voice command "Give me directions to here" to the electronic device 1000 while the first screen 1710 is displayed on the electronic device 1000, the electronic device 1000 may determine where 'here' intended by user A is in order to process a request. The AA café 1711, the BB café 1712, and the CC café 1713 are displayed on the map of the first screen 1710, and because user A has not specified which café among them is, the electronic device 1000 may not determine the destination indicated by user A only by the voice command.

The electronic device 1000 may determine the destination intended by user A by considering the overall context of the first screen 1710. The electronic device 1000 may identify and analyze the entire image of the first screen 1710 and determine the intention of user A based on results of recognition and analysis. Because the detailed information 1714 of the AA café 1711 is displayed on the lower half of the first screen 1710, the electronic device 1000 may determine that user A has searched for the AA café 1711 and accordingly the AA café 1711 is the destination intended by user A.

The electronic device 1000 may obtain context information 1730 of a 4W1R structure as follows based on a result of determining that the destination intended by user A is the AA café 1711.
Who: User A
What: Route to AA Café
Where: AA Café
When: Present
Reason: Want to search for route

The electronic device 1000 may generate a 4W1R vector based on the context information 1730 of the 4W1R structure obtained and search for a route to the AA café based on the 4W1R vector.

The 4W1R generator 120 may generate the 4W1R vector based on the context information 1730 of the 4W1R structure and transmit the 4W1R vector to the semantic reasoner 130. Because the 4W1R vector includes information that user A wants to search for the route to the AA café, the semantic reasoner 130 may request the preferred action generator 140 to search for the route to the AA café.

When there is a navigation app frequently used by user A when user A searches for a route, the preferred action generator 140 may generate a deeplink for executing the app and transmit the deeplink to the agent model classifier 150 together with information for identifying a search target (AA café).

The agent model classifier 150 may select an agent corresponding to a search category from among agents included in the agent PEFT model 200, and transmit a deeplink for executing a navigation app to the selected agent together with information about the search target. The selected agent may execute the navigation app through the received deeplink to search for the route to the AA café, and display a search result on the screen of the electronic device 1000.

### 2) Check and save appointment time set by user based on chat messages

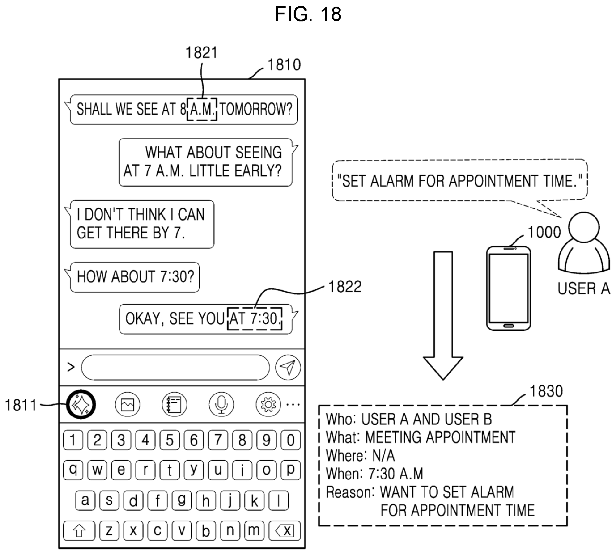

FIG. 18 is a diagram illustrating a process of an electronic device identifying an appointment time indicated by a user based on a context of a screen and setting an alarm according to an embodiment of the disclosure. A first screen 1810 of FIG. 18 may be displayed on the I/O interface 1200 of the electronic device 1000.

Chat messages exchanged by user A with another user are displayed on the first screen 1810 of FIG. 18. Referring to FIG. 18, user A has exchanged chat messages to set the appointment time, and a plurality of times (7:00, 7:30, and 8:00) have been mentioned in a process of setting the appointment time.

When user A inputs a voice command "Set an alarm for the appointment time" to the electronic device 1000 while the first screen 1810 is displayed on the electronic device 1000, the electronic device 1000 may determine when the 'appointment time' indicated by user A is in order to process a request. The chat messages on the first screen 1810 include the plurality of times (7:00, 7:30, and 8:00), and because user A has not clearly mentioned which of them is the appointment time, the electronic device 1000 may not determine the appointment time indicated by user A only by the voice command.

The electronic device 1000 may determine the appointment time intended by user A by considering the overall context of the first screen 1810. By analyzing contents of the chat messages, the electronic device 1000 may determine that user A has talked with another user for setting the appointment time, and the finally set appointment time is at 7:30 1822 in the morning 1821.

Based on a result of determining that the appointment time intended by user A is 7:30 a.m., the electronic device 1000 may obtain context information 1830 of a 4W1R structure as follows.
Who: User A and User B
What: Meeting appointment
Where: N/A
When: 7:30 a.m.
Reason: want to set alarm for appointment time

The electronic device 1000 may generate a 4W1R vector based on the context information 1830 of the 4W1R structure obtained and set the alarm for the appointment time (7:30 a.m.) based on the 4W1R vector.

### 3) Identify and store information displayed on screen in chunk unit

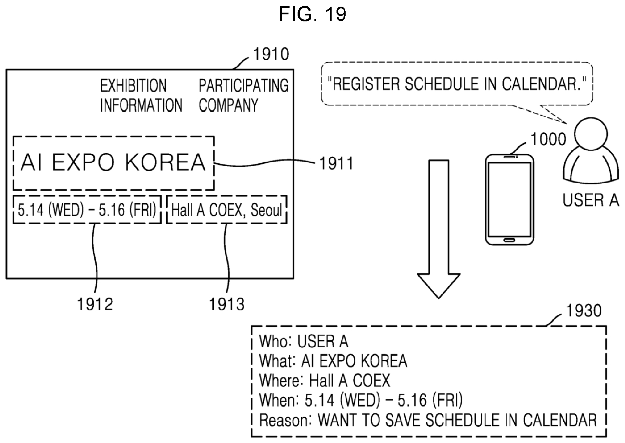

FIG. 19 is a diagram illustrating a process of an electronic device identifying and storing information in a chunk unit based on a context of a screen according to an embodiment of the disclosure. A first screen 1910 of FIG. 19 may be displayed on the I/O interface 1200 of the electronic device 1000.

The first screen 1910 of FIG. 19 is a screen displayed when accessing a homepage promoting an exhibition. As a result of user A accessing the homepage of the exhibition 'AI EXPO KOREA' through the electronic device 1000, the first screen 1910 is displayed on the electronic device 1000.

Various information related to the exhibition is displayed together on the first screen 1910. The name of the exhibition is displayed on a first area 1911, the period during which the exhibition is held is displayed on a second area 1912, and the place where the exhibition is held is displayed on a third area 1913.

When user A inputs a voice command "Register the schedule in the calendar" to the electronic device 1000 while the first screen 1910 is displayed on the electronic device 1000, the electronic device 1000 may obtain information about the 'schedule' indicated by user A in order to process a request. Information is displayed on each of the first area 1911, the second area 1912, and the third area 1913 of the first screen 1910, and when the electronic device 1000 fails to connect the information to each other, the information about the schedule may be stored incorrectly. For example, period during which the exhibition is held is saved accurately, but the name or the place of the exhibition may be incorrectly saved.

The electronic device 1000 according to an embodiment of the disclosure may identify the information displayed on the first area 1911, the second area 1912, and the third area 1913 in the chunk unit, thereby increasing the accuracy of the identified information. The electronic device 1000 may connect the information displayed on the first screen 1910 to each other to identify the information related to one entity (event, or exhibition, for example)

The electronic device 1000 may obtain context information 1930 of a 4W1R structure as follows based on the information related to the exhibition obtained from the first screen 1910.
Who: User A
What: AI EXPO KOREA
Where: Hall A COEX
When: 5.14 (Wed) - 5.16 (Fri)
Reason: Want to save schedule in the calendar

The electronic device 1000 may generate a 4W1R vector based on the context information 1930 of the 4W1R structure obtained and register the information (name, place, and period, for example) about the exhibition in a calendar app based on the 4W1R vector.

(6) Example in which device is controlled.

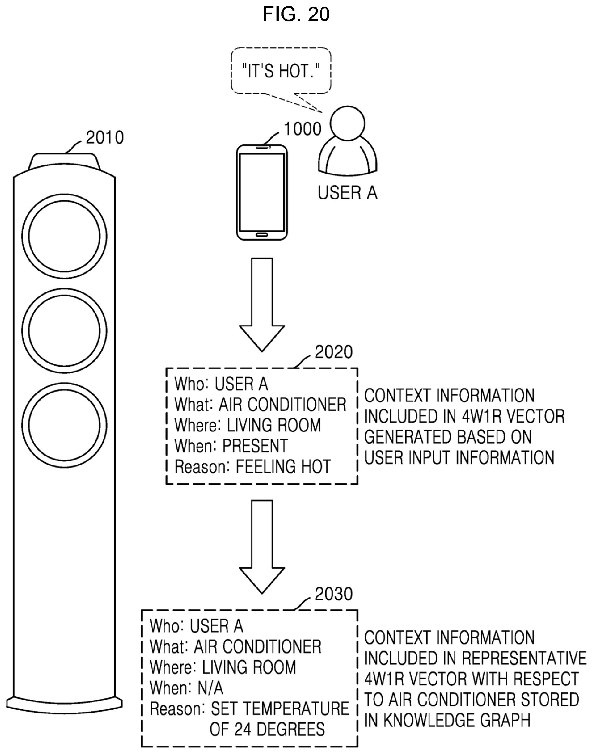

According to an embodiment of the disclosure, the electronic device 1000 may control other devices based on user input information. For example, the electronic device 1000 may control an operation of a home appliance such as an air conditioner based on a knowledge graph stored in the database 300 and a user input. FIG. 20 is a diagram illustrating a process of an electronic device controlling an air conditioner based on a user input according to an embodiment of the disclosure.

Referring to FIG. 20, when a user A's voice saying "It's hot" in the living room is input to the electronic device 1000, the electronic device 1000 may obtain context information 2020 of a 4W1R structure as follows based on user input information (voice input of user A).
Who: User A
What: Air conditioner
Where: Living room
When: Present
Reason: Feeling hot

When the 4W1R generator 120 generates the 4W1R vector based on the context information 2020 of the 4W1R structure and transmits the 4W1R vector to the semantic reasoner 130, the semantic reasoner 130 may determine that user A feels the present temperature of the living room hot based on the 4W1R vector. The semantic reasoner 130 may determine that it is necessary to control an air conditioner 2010 located in the living room, and check whether information for the control of the air conditioner 2010 is stored in a knowledge graph of the database 300.

When a representative 4W1R vector corresponding to the air conditioner 2010 is stored in the knowledge graph, the semantic reasoner 130 may extract context information 2030 of a 4W1R structure from the representative 4W1R vector as follows.
Who: User A
What: Air conditioner
Where: Living room
When: N/A
Reason: Set temperature of 24 degrees

The context information 2030 of the 4W1R structure as described above includes the meaning that user A prefers to adjust the set temperature of the air conditioner 2010 located in the living room to 24 degrees. The semantic reasoner 130 may adjust the set temperature of the air conditioner 2010 to 24 degrees based on the representative 4W1R vector corresponding to the air conditioner 2010.

According to an embodiment of the disclosure, the representative 4W1R vector corresponding to the air conditioner 2010 may be generated or updated based on a usage history indicating user A has controlled the air conditioner 2010.

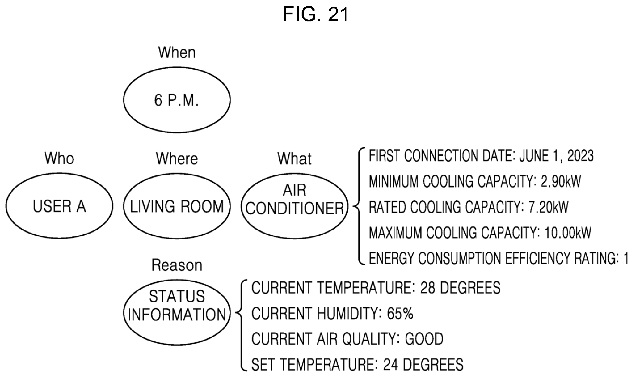

According to an embodiment of the disclosure, the electronic device 1000 may store information related to device control in a knowledge graph when a user directly controls a device such as an air conditioner. For example, the electronic device 1000 may obtain context information of a 4W1R structure from an action of the user controlling the device, convert the obtained context information into a 4W1R vector, and store the 4W1R vector in a knowledge graph. FIG. 21 is a diagram illustrating a knowledge graph updated by an electronic device according to an action of a user controlling an air conditioner according to an embodiment of the disclosure.

It is assumed that user A comes home at 6 p.m. and adjusts the set temperature of an air conditioner located in the living room to 24 degrees. The electronic device 1000 may obtain context information of a 4W1R structure from an action of user A as follows.
Who: User A
What: Air conditioner (device information)
Where: Living room
When: 6 p.m.
Reason: Status information (surrounding environment data)

The electronic device 1000 may generate a knowledge graph as shown in FIG. 21 based on a 4W1R vector converted from the obtained context information.

Referring to FIG. 21, pieces of 4W1R information were respectively stored in nodes, and related attributes were added to a node corresponding to What and a node corresponding to Reason. Device information of the air conditioner was added to the node corresponding to What, and information about the surrounding environment was added to the node corresponding to Reason. Because information such as habits, patterns, or preferences, for example, of a user regarding the control of the air conditioner is stored in the knowledge graph generated, and the electronic device 1000 may control the air conditioner according to the surrounding environment later.

The knowledge graph generated as above may be used for device control later. For example, the electronic device 1000 may control the air conditioner with optimal efficiency in consideration of surrounding environments such as temperature and humidity and the performance of the air conditioner. The electronic device 1000 may generate a representative 4W1R vector corresponding to the air conditioner based on the knowledge graph.

(7) Example in which a photo is searched for.

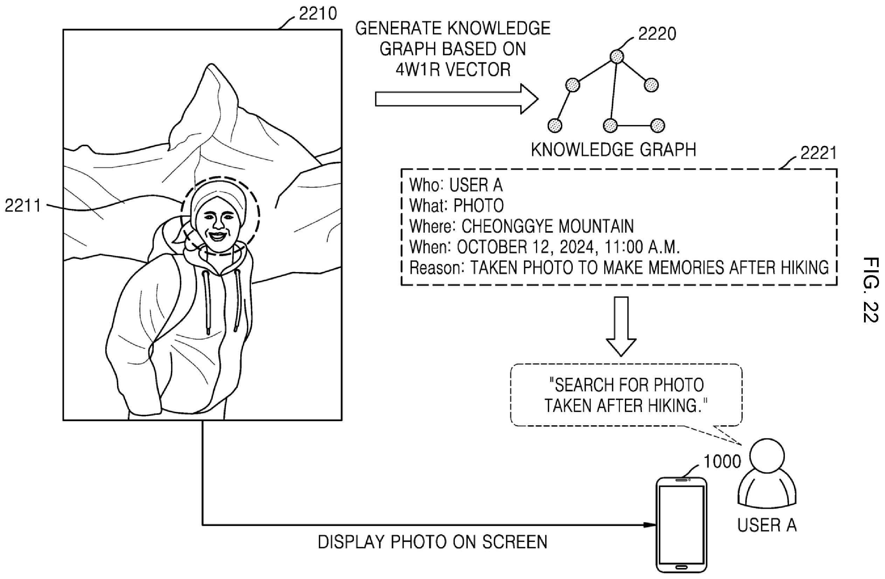

According to an embodiment of the disclosure, the electronic device 1000 may generate knowledge graphs corresponding to stored photos and search for a photo based on the knowledge graph. FIG. 22 is a diagram illustrating a process of an electronic device generating a knowledge graph when storing a photograph and searching for the photograph according to a user request.

When user A takes a photo 2210 by using the electronic device 1000, the electronic device 1000 may obtain context information 2221 of a 4W1R structure from the photo 2210. For example, the electronic device 1000 may determine that a person included in the photo 2210 is user A (Who) (subject information) by recognizing a face 2211 of the person. The electronic device 1000 may determine a location and a time (Where and When) that the photo 2210 was taken based on GPS information and time information. The electronic device 1000 may determine that a piece of information for Reason (reason information) is 'taking a photo to make memories after hiking' based on a situation in which the photo 2210 was taken. As a result, the electronic device 1000 may obtain the context information 2221 of the 4W1R structure as follows.
Who: User A
What: Photo
Where: Cheonggye Mountain
When: October 12, 2024, 11:00 a.m.
Reason: Taken photo to make memories after hiking

The 4W1R generator 120 may generate a 4W1R vector based on the context information 2221 of the 4W1R structure as described above and transmit the 4W1R vector to the semantic reasoner 130, and the semantic reasoner 130 may generate a knowledge graph 2220 based on the received 4W1R vector.

When user A inputs a voice command "Search for a photo taken after hiking" to the electronic device 1000, the electronic device 1000 may check knowledge graphs stored in the database 300 and determine that the photo 2210 was taken when hiking based on the pieces of information for Where (location information) and Reason (reason information) of the 4W1R vector stored in the knowledge graph 2220. The electronic device 1000 may display the photo 2210 on a screen in response to the command from user A.

The electronic device 1000 may generate a corresponding knowledge graph according to the above-described method when storing not only a photo taken directly but also all photos obtained in various ways.

### 6. Describing a process with reference to flowcharts

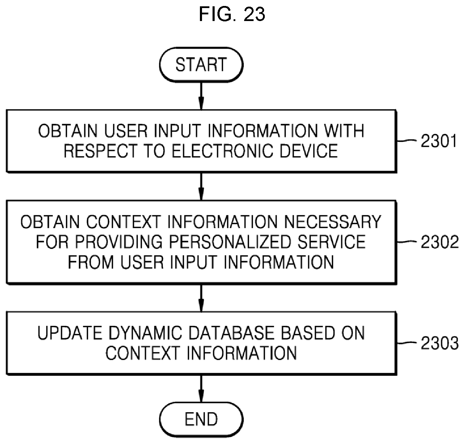

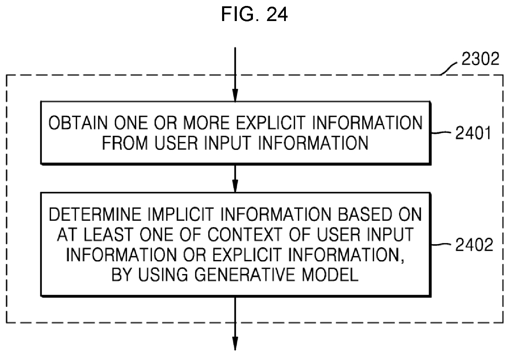

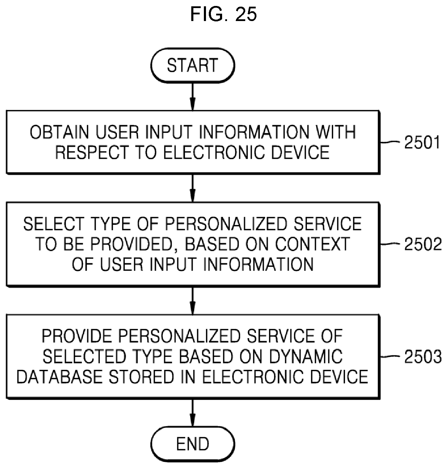

A method, performed by an electronic device, of managing a dynamic database for providing a personalized service according to embodiments of the disclosure will be described with reference to flowcharts of FIGS. 23 and 24. A method, performed by an electronic device, of providing a personalized service based on a dynamic database according to embodiments of the disclosure will be described with reference to flowcharts of FIGS. 25 to 28.

Operations included in the flowcharts of FIGS. 23 to 28may be performed by the electronic device 1000 of FIGS. 4 and 5, and thus the descriptions given with reference to FIGS. 1 to 22 may be equally applied to FIGS. 23 to 28.

Referring to FIG. 23, in operation 2301, the electronic device may obtain user input information from the electronic device. For example, the electronic device may obtain the user input information by storing a user input to the electronic device or identifying a screen displayed on the electronic device. In this regard, the user input information may include at least one of information input by the user to the electronic device, information based on a usage pattern in which the user uses the electronic device, information about an operation performed by the user through the electronic device, or information displayed on the screen of the electronic device while the user uses the electronic device.

In operation 2302, the electronic device may obtain context information for providing the personalized service from the user input information. According to an embodiment of the disclosure, the context information may include implicit information that may be determined based on the user input information. The context information may be information used for knowledge graph based reasoning for providing the personalized service. Detailed operations included in operation 2302 are shown in FIG. 24.

Referring to FIG. 24, in operation 2401, the electronic device may obtain one or more pieces of explicit information from the user input information. According to an embodiment of the disclosure, the explicit information may include information about Who, What, Where, and When.

In operation 2402, the electronic device may determine implicit information based on at least one of a context of the user input information or the explicit information, by using a generative model. According to an embodiment of the disclosure, the implicit information may include information about Reason. The electronic device may determine the implicit information included in the context information based on the overall context of the user input information.

Referring back to FIG. 23, in operation 2303, the electronic device may update the dynamic database based on the context information. According to an embodiment of the disclosure, the electronic device may store only the latest pieces of information from each piece of the context information in the dynamic database. In this regard, the dynamic database may be a knowledge graph including a node corresponding to each item of the context information. According to an embodiment of the disclosure, the electronic device may store information for controlling the corresponding device in the dynamic database based on a usage history indicating the control of other devices.

Referring to FIG. 25, in operation 2501, the electronic device may obtain user input information with respect to the electronic device. For example, the electronic device may obtain the user input information by storing a user input to the electronic device or identifying a screen displayed on the electronic device. In this regard, the user input information may include at least one of information input by the user to the electronic device, information based on a usage pattern in which the user uses the electronic device, information about an operation performed by the user through the electronic device, or information displayed on the screen of the electronic device while the user uses the electronic device.

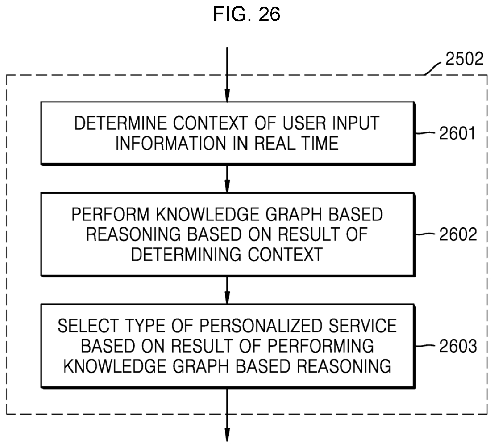

In operation 2502, the electronic device may select a type of the personalized service to be provided, based on a context of the user input information. According to an embodiment of the disclosure, the personalized service may include at least one of call summary, chat summary, schedule saving, device control, photo search, or automatic answer generation. According to an embodiment of the disclosure, when information about a new schedule is included in the user input information, the electronic device may select a personalized service for updating the schedule in an app for managing the schedule. According to an embodiment of the disclosure, when the user input information includes a call content or a chat content, the electronic device may select a personalized service for summarizing and saving the call content or the chat content. Detailed operations included in operation 2502 are shown in FIG. 26.

Referring to FIG. 26, in operation 2601, the electronic device may determine a context of the user input information in real time. Subsequently, in operation 2602, the electronic device may perform knowledge graph based reasoning based on a result of determining the context. Finally, in operation 2603, the electronic device may select the type of the personalized service based on the result of performing knowledge graph based reasoning.

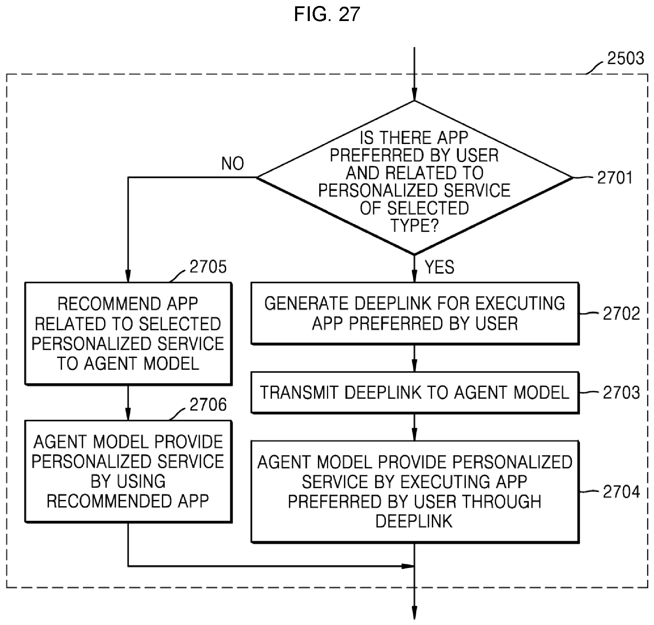

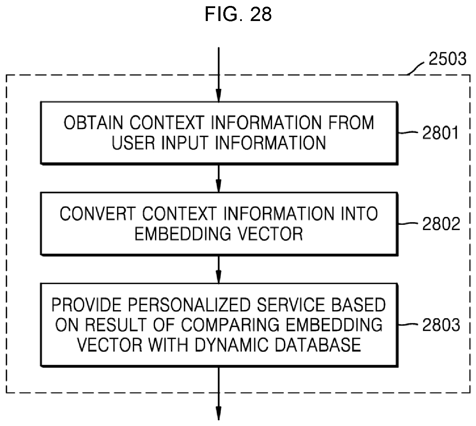

Returning to FIG. 25 again, in operation 2503, the electronic device may provide the personalized service of the type selected in operation 2502 based on the dynamic database stored in the electronic device. According to an embodiment of the disclosure, when a request for an entity is included in the user input information, the electronic device may determine the entity indicated by the user based on the context of the screen and then process the request by using the determined entity. According to an embodiment of the disclosure, when the user input information includes a request for control of another device, the electronic device may access the dynamic database to obtain control information corresponding to the other device, and then control the other device based on the control information. Detailed operations included in operation 2503 are shown in each of FIGS. 27 and 28.

Referring to FIG. 27, in operation 2701, the electronic device may determine whether there is an app preferred by the user and related to the personalized service of the type selected in operation 2502.

When there is the app preferred by user A as a result of determination, the electronic device may proceed to operation 2702 and generate a deeplink for executing the app preferred by the user. Subsequently, in operation 2703, the electronic device may transmit the deeplink to an agent model. Finally, in operation 2704, the agent model of the electronic device may provide the personalized service by executing the app preferred by the user through the deeplink.

When there is no app preferred by user A as a result of determination, the electronic device may proceed to operation 2705 and recommend an app related to the selected personalized service to the agent model. In operation 2706, the agent model of the electronic device may provide the personalized service by using the recommended app.

Referring to FIG. 28, in operation 2801, the electronic device may obtain context information from the user input information. Subsequently, in operation 2802, the electronic device may convert the context information into an embedding vector. Finally, in operation 2803, the electronic device may provide a personalized service based on a result of comparing the embedding vector with the dynamic database.

According to an embodiment of the disclosure, the electronic device 1000 may provide a personalized service to a user by considering information collected through various apps installed in the electronic device 1000. For example, the electronic device 1000 may obtain context information from user input information collected through an app, classify the context information based on reason information included in the context information (information about reason of an event corresponding to the context information) and store the classified context information. The electronic device 1000 may respond to a user question or request by considering the context information classified into the same category together.

An event corresponding to user input information or context information obtained from the user input information may exist, and the context information may include information about reason for an event (reason information). The reason information may be determined based on the user input information or the context information.

7. Example in which context information are classified and store based on reason information.

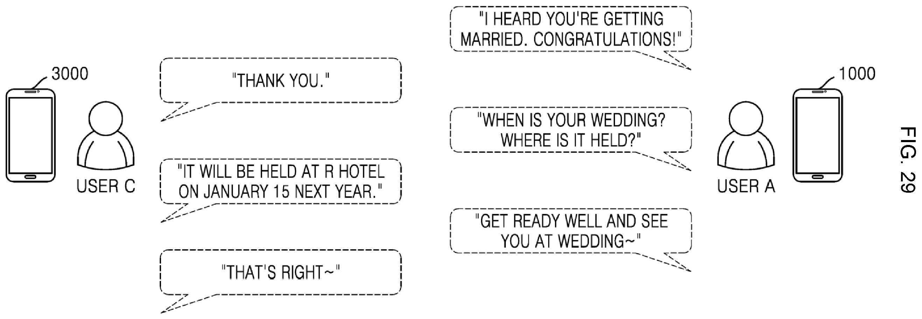

FIGS. 29 to 35 are diagrams for explaining a method of an electronic device classifying and storing information obtained through a plurality of apps with respect to a reason of an event according to an embodiment of the disclosure.

Referring to FIG. 29, user A and user C make a call by using their electronic devices 1000 and 3000, respectively. FIG. 29 shows content of the call between user A and user C.

The electronic device 1000 may obtain context information from the call content of user A and user C, and generate or update a knowledge graph based on the obtained context information. The electronic device 1000 may save a schedule in a calendar app based on the updated knowledge graph.

The electronic device 1000 may obtain the call content of user A and user C as user input information, obtain context information from the obtained user input information (call content), and store the obtained context information in the knowledge graph. The electronic device 1000 may obtain the context information of a 4W1R structure from the call content.

Referring to the call shown in FIG. 29, user A is talking with user C about wedding of user C and mentions a place and a time of wedding. Referring to the call, it may be seen that user C is planning to get married at Hotel R on January 15 of next year (2025). The electronic device 1000 may obtain the context information of the 4W1R structure from the call content as follows.
Who: User C
What: Wedding
Where: R Hotel
When: January 15, 2025
Reason: Wedding of user C

Among information included in the context information, 1R (wedding of user C) corresponds to reason information. The reason information may be included in the implicit information described above and may be determined based on the user input information (call content).

According to an embodiment of the disclosure, the context reasoner 110 of the electronic device 1000 may summarize the call content, obtain the context information of the 4W1R structure from the summarized call content, and transmit the context information to the 4W1R generator 120. The 4W1R generator 120 may generate a 4W1R vector by performing embedding on the received context information of the 4W1R structure, and transmit the generated 4W1R vector to the semantic reasoner 130. The semantic reasoner 130 may generate a knowledge graph based on the received 4W1R vector.

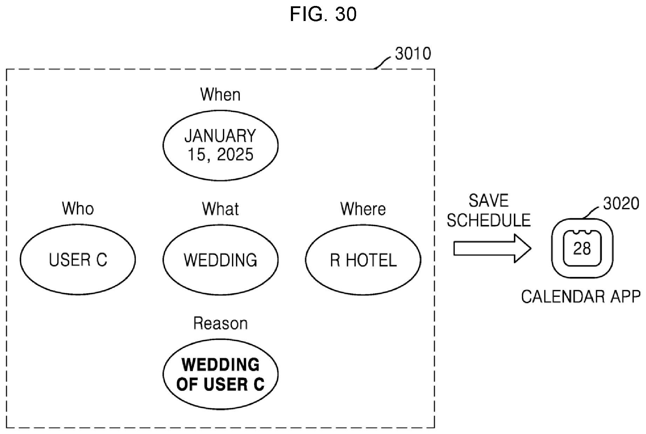

A first knowledge graph 3010 generated by the semantic reasoner 130 based on the context information obtained from the call content of FIG. 29 is shown in FIG. 30. Referring to FIG. 30, Who (user C) (subject information), What (wedding) (event information), Where (R hotel) (location information), When (January 15, 2025) (temporal information), and Reason (wedding of user C) (reason information) are saved in nodes of the first knowledge graph 3010, respectively.

The semantic reasoner 130 may determine that it is necessary to save a schedule in a calendar app 3020 based on the first knowledge graph 3010, and request the preferred action generator 140 to save the schedule in the calendar app 3020. The preferred action generator 140 may generate a deeplink for executing the calendar app 3020 and transmit the deeplink to the agent model classifier 150 together with information included in the first knowledge graph 3010. The agent model classifier 150 may select an agent corresponding to a schedule management category from among the plurality of agents 210, 220, and 230 included in the agent PEFT model 200, and transmit the deeplink for executing the calendar app 3020 and the information included in the first knowledge graph 3010 to the selected agent. The selected agent may execute the calendar app 3020 and save a wedding schedule of user C included in the first knowledge graph 3010.

When the wedding schedule of the user C is saved in the calendar app 3020, the electronic device 1000 may determine whether the wedding schedule overlaps a schedule previously saved in the calendar app 3020, and reflect a result of determination when providing the personalized service. For example, when a business trip schedule already saved in the calendar app 3020 overlaps the wedding schedule of user C, the electronic device 1000 may provide a notification to user A about the overlapping schedule.

When storing the first knowledge graph 3010 in the database 300, the semantic reasoner 130 may classify the first knowledge graph 3010 based on the reason information (1R) and store the classified first knowledge graph 3010. For example, the semantic reasoner 130 may connect context information having the same reason information to each other and store the context information as knowledge graphs. For example, the semantic reasoner 130 may connect context information which are similar more than a certain criterion to each other and store the context information as knowledge graphs, even when the reason information is not the same. In summary, the semantic reasoner 130 may classify context information that correspond to each other in the reason information into the same category and store the classified context information.

When storing the first knowledge graph 3010 shown in FIG. 30 in the database 300, the semantic reasoner 130 may connect the first knowledge graph 3010 to another knowledge graph including 1R that is the same as or similar to 'wedding of user C'.

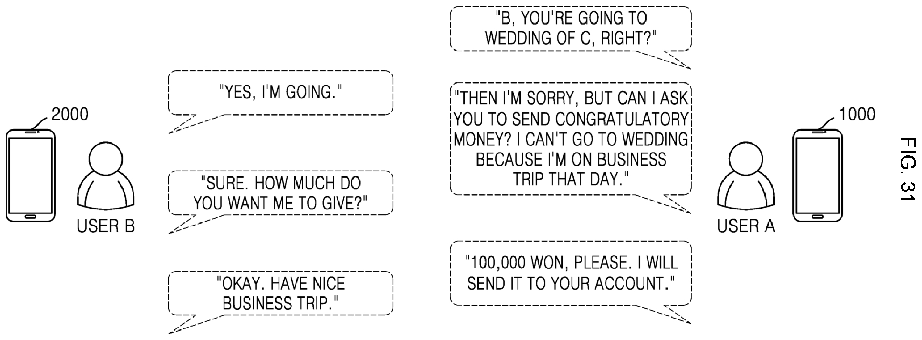

A method of connecting information collected through various apps installed in the electronic device 1000 based on reason information will be described in more detail with reference to FIGS. 31 to 35.

Referring to FIG. 31, user A and user B make a call by using their electronic devices 1000 and 2000, respectively. FIG. 31 shows content of the call between user A and user B.

The electronic device 1000 may obtain the call content of user A and user B as user input information, obtain context information from the obtained user input information (call content), and store the obtained context information in a knowledge graph. The electronic device 1000 may obtain context information of a 4W1R structure from the call content.

Referring to the call content shown in FIG. 31, user A is asking user B to send congratulatory money. Referring to the call content, it may be seen that because user A is unable to attend wedding of user C due to a business trip, user A is asking user B to send congratulatory money. The electronic device 1000 may obtain context information of a 4W1R structure from the call content as follows.
Who: User B
What: Asking to send congratulatory money
Where: N/A
When: January 15, 2025
Reason: Unable to attend wedding of user C due to business trip

According to an embodiment of the disclosure, the context reasoner 110 of the electronic device 1000 may summarize the call content, obtain the context information of the 4W1R structure from the summarized call content, and transmit the context information to the 4W1R generator 120. The 4W1R generator 120 may generate a 4W1R vector by performing embedding on the received context information of the 4W1R structure, and transmit the generated 4W1R vector to the semantic reasoner 130. The semantic reasoner 130 may generate a knowledge graph based on the received 4W1R vector.

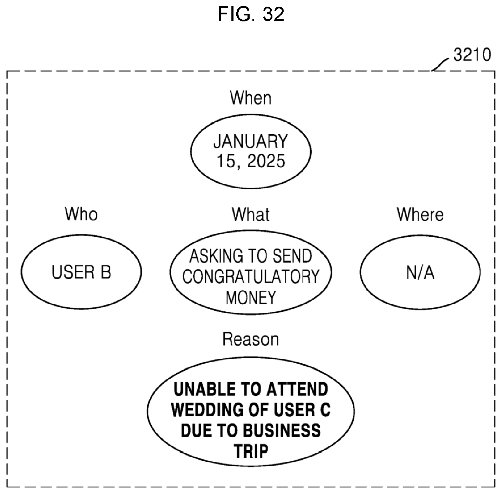

A second knowledge graph 3210 generated by the semantic reasoner 130 based on the context information obtained from the call content of FIG. 31 is shown in FIG. 32. Referring to FIG. 32, Who (user B) (subject information), What (asking to send congratulatory money) (event information), Where (N/A) (location information), When (January 15, 2025) (temporal information) and Reason (unable to attend wedding of user C due to a business trip) (reason information) were saved in nodes of the second knowledge graph 3210, respectively.

When storing the second knowledge graph 3210 in the database 300, the semantic reasoner 130 may classify the second knowledge graph 3210 based on the reason information (1R) and store the classified second knowledge graph 3210. Because the reason information of the second knowledge graph 3210 includes a common element of ' wedding of user C ', the reason information of the second knowledge graph 3210 corresponds to the reason information of the first knowledge graph 3010, and accordingly the semantic reasoner 130 may connect the second knowledge graph 3210 to the first knowledge graph 3010 and store the connected knowledge graph.

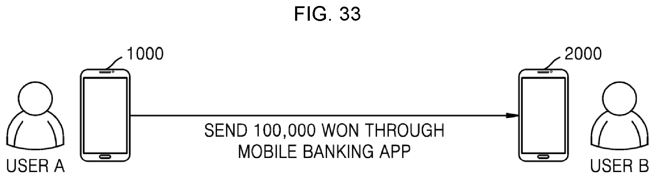

FIG. 33 is a diagram illustrating a situation in which a user sends congratulatory money to another person through an electronic device upon requesting the person to deliver the money, according to an embodiment of the disclosure. When user A sends 100,000 Won to user B on December 20, 2024 through a mobile banking app installed on the electronic device 1000, the electronic device 1000 of user A may obtain user input information (sent 100,000 Won to user B on December 20, 2024) from the mobile banking app.

The electronic device 1000 may obtain context information from the user input information obtained through the mobile banking app and store the context information in a knowledge graph, and at this time, the context information may be obtained by considering information obtained through other apps together. For example, the electronic device 1000 may obtain the context information from the user input information (sent 100,000 Won to user B on December 20, 2024) by considering information included in the second knowledge graph 3210 of FIG. 32 already stored in the database 300.

Referring to the second knowledge graph 3210 of FIG. 32, the context reasoner 110 of the electronic device 1000 may determine a situation in which user A has asked user B to send 100,000 Won in congratulatory money for wedding of user C. In such a situation, because user A sent 100,000 Won to user B, the context reasoner 110 may determine that 100,000 Won sent to user B is the congratulatory money for wedding of user C. The context reasoner 110 may obtain the context information of the 4W1R structure as follows.
Who: User B
What: Send 100,000 Won
Where: N/A
When: December 20, 2024
Reason: Asking to send congratulatory money for wedding of user C

When the context reasoner 110 obtains the context information of the 4W1R structure as described above and transmits the context information to the 4W1R generator 120, the 4W1R generator 120 may generate a 4W1R vector by performing embedding on the received context information of the 4W1R structure and transmit the generated 4W1R vector to the semantic reasoner 130. The semantic reasoner 130 may generate a knowledge graph based on the received 4W1R vector.

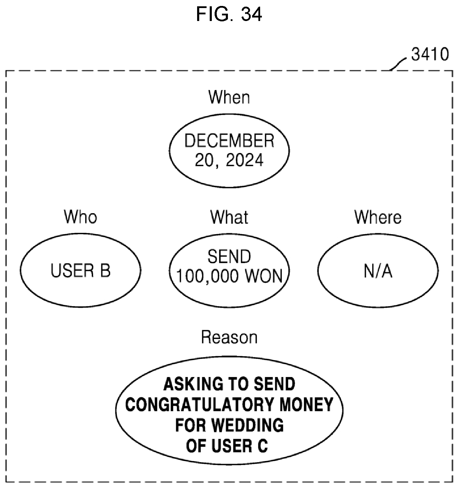

A third knowledge graph 3410 generated by the semantic reasoner 130 in a situation illustrated in FIG. 33 is shown in FIG. 34. Referring to FIG. 34, Who (user B) (subject information), What (sent 100,000 Won) (event information), Where (N/A) (location information), When (December 20, 2024) (temporal information), and Reason (asking to send the congratulatory money for wedding of user C) (reason information) are saved in nodes of the third knowledge graph 3410, respectively.

When storing the third knowledge graph 3410 in the database 300, the semantic reasoner 130 may connect the third knowledge graph 3410 to another knowledge graph with respect to 1R (asking to send the congratulatory money for wedding of user C). Because the 1R of the first knowledge graph 3010 of FIG. 30 and the 1R of the second knowledge graph 3210 of FIG. 32 are similar to the 1R of the third knowledge graph 3410 in that the 1Rs include a common element of 'wedding of user C', the semantic reasoner 130 may connect the third knowledge graph 3410 to each of the first knowledge graph 3010 and the second knowledge graph 3210 and store the connected knowledge graph.

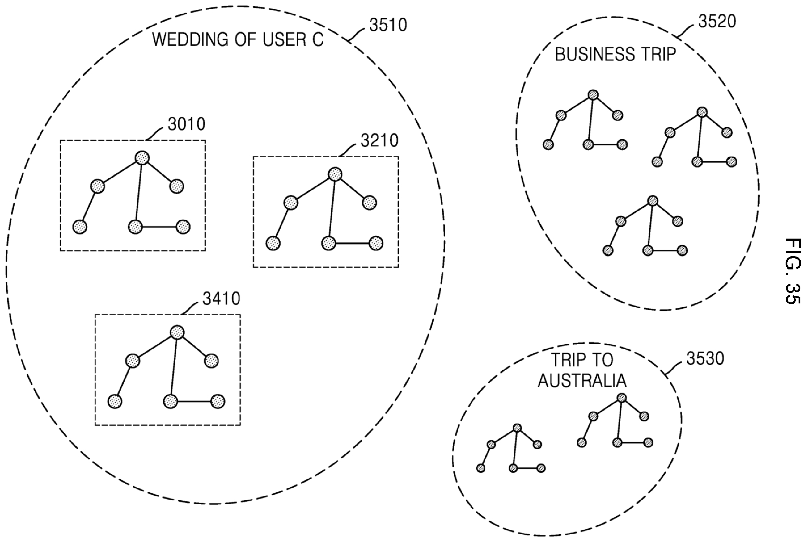

FIG. 35 is a diagram illustrating an example in which an electronic device classifies context information based on reason information included in the context information and stores the classified context information according to an embodiment of the disclosure.

When storing the context information in a knowledge graph, the electronic device 1000 may classify the context information based on the reason information included in the context information and store the classified context information. As a result, the context information including the same or similar reason information (e.g., 1R) may be classified into the same category and stored in the database 300.

Referring to FIG. 35, the first knowledge graph 3010, the second knowledge graph 3210, and the third knowledge graph 3410 each including reason information related to 'wedding of user C' were classified into a first category 3510 and stored in the database 300. Similarly, knowledge graphs including reason information related to 'business trip' may be classified into in a second category 3520 and stored in the database 300, and knowledge graphs including reason information related to 'trip to Australia' may be classified in a third category 3530 and stored in the database 300.

The electronic device 1000 may provide a personalized service to the user based on knowledge graphs (context information) classified into a plurality of categories and stored. For example, when user A inputs a question to the electronic device 1000, the electronic device 1000 may generate an answer by considering knowledge graphs included in the same category together.

When user A asks the electronic device 1000, "Why did I send 100,000 Won to B?" the electronic device 1000 may generate an answer "You sent 100,000 Won to B by asking B to send the congratulatory money on your behalf because you are unable to attend C's wedding due to the overlapping business trip." by considering the information stored in the first knowledge graph 3010, the second knowledge graph 3210, and the third knowledge graph 3410 included in the first category 3510. As describe above, the electronic device 1000 may answer a user question or process a user request by considering knowledge graphs included in each of the first category 3510, the second category 3520, and the third category 3530.

8. Example in which a personalized service is provided based on context information classified based on a reason for an event.

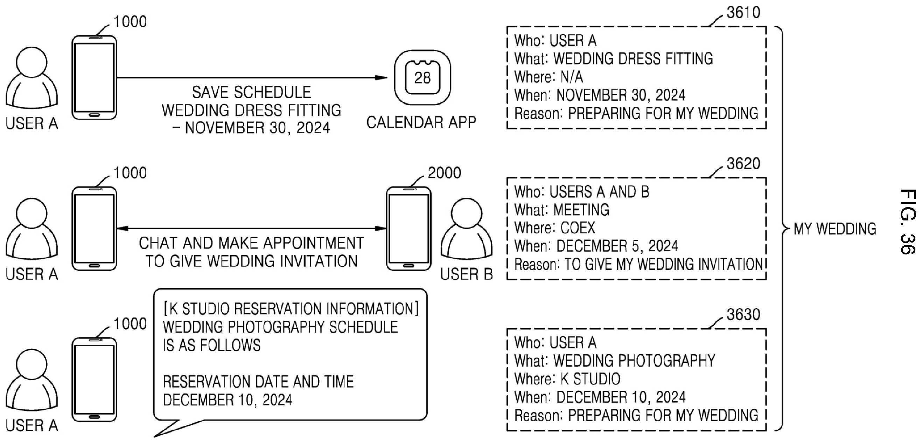

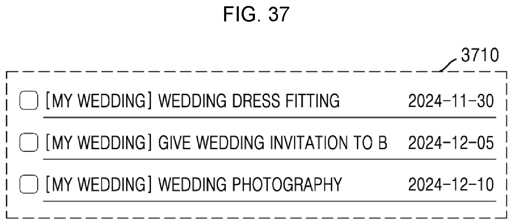

FIGS. 36 and 37 are diagrams for explaining a method of an electronic device classifying context information with respect to a reason for an event and providing a personalized service based on the classified context information according to an embodiment of the disclosure.

Referring to FIG. 36, when user A saves a wedding dress fitting schedule in a calendar app installed in the electronic device 1000, the electronic device 1000 may obtain first context information 3610 of a 4W1R structure as follows.
Who: User A
What: Wedding dress fitting
Where: N/A
When: November 30, 2024
Reason: My wedding

When user A chats with user B through the electronic device 1000 and makes an appointment to give a wedding invitation, the electronic device 1000 may obtain second context information 3620 of the 4W1R structure as follows.
Who: Users A and B
What: Meeting
Where: COEX
When: December 5, 2024
Reason: To give my wedding invitation

When user A receives a message guiding a wedding photography schedule through the electronic device 1000, the electronic device 1000 may obtain third context information 3630 of the 4W1R structure as follows.
Who: User A
What: Wedding photography
Where: K Studio
When: December 10, 2024
Reason: Preparing for my wedding

The electronic device 1000 may classify the context information based on the reason information included in the context information and store the classified context information. Because the reason information of each of the first context information 3610, the second context information 3620, and the third context information 3630 includes a common element of 'my wedding', the electronic device 1000 may classify the first context information 3610, the second context information 3620, and the third context information 3630 into the same category and store the classified context information. For example, the electronic device 1000 may connect the first context information 3610, the second context information 3620, and the third context information 3630 to each other and store the connected context information.

The electronic device 1000 may provide the personalized service to user A by considering the context information classified into the same category.

According to an embodiment of the disclosure, the electronic device 1000 may provide a to-do list including events corresponding to the context information classified into the same category. Referring to FIG. 37, events included in a category of 'my wedding' are included in a to-do list 3710.

According to an embodiment, the electronic device 1000 may automatically save schedules corresponding to context information in a calendar app, but may save the schedules so that the schedules are classified according to categories to which the context information belongs. For example, the electronic device 1000 may automatically save schedules corresponding to the second context information 3620 and the third context information 3630 in the calendar app, but may indicate that the schedules relate to 'my wedding' through head words or colors.

The electronic device 1000 may provide the personalized service by using the context information connected to each other in various other ways.

### 9. Describing a process with reference to a flowchart

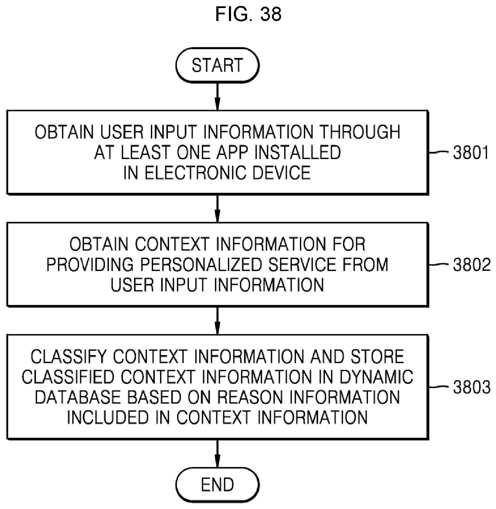

FIG. 38 is a flowchart illustrating a method of managing a dynamic database for providing a personalized service according to an embodiment of the disclosure.

Referring to FIG. 38, in operation 3801, an electronic device may obtain user input information through at least one app installed in the electronic device. For example, the electronic device may obtain the user input information by storing a user input received in a process of a user using an app, or by identifying a screen displayed on the electronic device in the process of the user using the app. In this regard, the user input information may include at least one of information input by the user to the electronic device, information based on a usage pattern in which the user uses the electronic device, information about an operation performed by the user through the electronic device, or information displayed on the screen of the electronic device while the user uses the electronic device.

In operation 3802, the electronic device may obtain context information for providing the personalized service from the user input information. The context information may be information used for knowledge graph based reasoning for providing the personalized service.

According to an embodiment of the disclosure, the context information may include reason information, and the reason information may include information about a reason for an event corresponding to the context information. The reason information may be determined based on the user input information corresponding to the context information.

According to an embodiment of the disclosure, the context information may include explicit information and implicit information. The implicit information may be determined based on the user input information and may include the reason information.

According to an embodiment of the disclosure, the electronic device may obtain one or more pieces of explicit information from the user input information and determine the reason information based on at least one of a context of the user input information or the one or more pieces of explicit information by using a generative model.

According to an embodiment of the disclosure, the explicit information may include information about Who, What, Where, and When. The reason information may include information about a reason for occurrence of an event corresponding to the context information.

In operation 3803, the electronic device may classify the context information and store the classified context information in a dynamic database based on the reason information included in the context information. According to an embodiment of the disclosure, the electronic device may connect the context information to at least one other piece of context information previously stored in a database and store the connected context information with respect to the reason information.

When first reason information is included in first context information obtained from the user input information, and second context information including second reason information is already stored in the database, the electronic device may compare the first reason information with the second reason information, when the first reason information and the second reason information correspond to each other, connect the first context information to the second context information, and store the connected context information.

The electronic device may provide the personalized service to the user based on the context information connected to each other after operation 3803. For example, the electronic device may provide the personalized service by considering any one context information and at least one other piece of context information connected to the corresponding context information.

According to an embodiment of the disclosure, the electronic device may store in memory a collaborative Parameter-Efficient Fine-Tuning (PEFT) model that is fine-tuned to personalize usage of the electronic device based on a dynamic knowledge graph stored in the dynamic database. The PEFT model may include a master PEFT model and an agent PEFT model. The personalized service may be executed by determining, based on the master PEFT model, one or more instructions to be performed; and executing the personalized service, via the agent PEFT model, based on the one or more instructions to be performed.

A method of managing a dynamic database for providing a personalized service according to an embodiment of the disclosure may include obtaining user input information from an electronic device, obtaining context information that relates to the personalized service, and updating the dynamic database based on the context information. The context information may include implicit information that may be determined based on the user input information.

According to an embodiment, the context information may be information used for knowledge graph based reasoning for providing the personalized service.

According to an embodiment, the obtaining the context information may include obtaining one or more pieces of explicit information from the user input information and determining the implicit information based on at least one of a context of the user input information or the one or more pieces of explicit information by using a generative model.

According to an embodiment, the implicit information included in the context information may be determined based on a context indicated by the user input information.

According to an embodiment, the explicit information may include information about Who, What, Where, and When (subject information, event information, location information, and temporal information, respectively), and the implicit information may include information about Reason (reason information).

According to an embodiment, in the updating of the dynamic database, only the latest pieces of information of the context information may be stored in the dynamic database.

According to an embodiment, the dynamic database may be a knowledge graph including nodes corresponding to each piece of information in the context information, such as the subject information, the event information, the location information, the temporal information, and the reason information.

According to an embodiment, in the updating of the dynamic database, information for controlling another device may be stored in the dynamic database based on a usage history indicating the electronic device has controlled the other device.

According to an embodiment, the user input information may include at least one of information input to the electronic device by a user, information based on a usage pattern of the electronic device by the user, information based on an action performed on the electronic device by the user, or information displayed on a screen of the electronic device based on usage of the electronic device by the user.

According to an embodiment, the obtaining of the user input information may include storing a user input by a user to the electronic device or identifying the screen displayed on the electronic device.

An electronic device according to an embodiment includes memory storing at least one instruction, and at least one processor, wherein the at least one instruction, when executed, individually or collectively, by the at least one processor, may cause the electronic device to obtain user input information from an electronic device, obtain, from the user input information, context information that relates to a personalized service, and update a dynamic database based on the context information, and the context information may include implicit information that may be determined based on the user input information.

According to an embodiment, the context information may be information used for knowledge graph based determinations for providing the personalized service.

According to an embodiment, in the obtaining of the context information, the electronic device may obtain one or more pieces of explicit information from the user input information and may determine the implicit information based on a generative model using at least one of a context of the user input information or the one or more pieces of explicit information.

According to an embodiment, the implicit information included in the context information may be determined based on the a context indicated by the user input information.

According to an embodiment, the explicit information may include information about Who, What, Where, and When (subject information, event information, location information, and temporal information, respectively), and the implicit information may include information about Reason (reason information).

According to an embodiment, in the updating the dynamic database, the at least one instruction, when executed, individually or collectively, by the at least one processor, may cause the electronic device to store the latest pieces of information, such as the subject information, the event information, the location information, the temporal information, and the reason information, of the context information in the dynamic database.

According to an embodiment, the dynamic database may be a knowledge graph including nodes corresponding to each piece of information of the context information, such as the subject information, the event information, the location information, the temporal information, and the reason information.

According to an embodiment, in the updating the dynamic database, the at least one instruction, when executed by the at least one processor, individually or collectively, may cause the electronic device store information for controlling another device in the dynamic database based on a usage history indicating the electronic device has controlled the other device.

According to an embodiment, the user input information may include at least one of information input to the electronic device by a user, information based on a usage pattern of the electronic device by the user, information based on an action performed on the electronic device by the user, or information displayed on a screen of the electronic device based on usage of the electronic device by the user.

A method of managing a dynamic database for providing a personalized service according to an embodiment of the disclosure may include obtaining user input information through at least one app installed on an electronic device, obtaining, from the user input information, context information that includes information indicating a reason for an event, and that relates to the personalized service, and obtaining classified context information by classifying the context information based on reason information included in the context information and storing the classified context information in the dynamic database; and executing the personalized service on the electronic device based on the context information and at least one other piece of context information connected to the context information.

According to an embodiment, the obtaining the classified context information and the storing the classified context information may include obtaining connected context information by identifying, based on the reason information, at least one connection between the context information and the at least one other piece of context information previously stored in the dynamic database with respect to the reason information and storing the connected context information in the dynamic database.

According to an embodiment, when first reason information is included in first context information obtained from the user input information, and second context information including second reason information is stored in the dynamic database, the classifying the context information and the storing the classified context information in the dynamic database may include comparing the first reason information with the second reason information, and based on identifying correspondence between the first reason information and the second reason information, obtaining the connected context information by connecting the first context information to the second context information and storing the connected context information in the dynamic database.

According to an embodiment, the reason information may be determined based on content of the user input information corresponding to the context information.

According to an embodiment, the context information may include explicit information and implicit information that is determined based on content of the user input information. The implicit information may include the reason information.

According to an embodiment, the obtaining the context information may include determining a context from the user input information; obtaining one or more pieces of explicit information from the user input information; and determining the reason information based on at least one of a context of the user input information or the one or more pieces of explicit information by using a generative model.

According to an embodiment, the explicit information may include information about Who, What, Where, and When (subject information, event information, location information, and temporal information, respectively), and the reason information may include information indicating the reason for the event. The event may correspond to to the context information.

According to an embodiment, the user input information may include at least one of information to the electronic device by a user, information based on a usage pattern of the electronic device by the user, information based on an action performed on the electronic device by the user, or information displayed on a screen of the electronic device based on usage of the electronic device by the user.

According to an embodiment, the obtaining the user input information may include storing a user input to the at least one app by a user, or identifying a screen displayed on the electronic device corresponding to the at least one app.

According to an embodiment, the electronic device may include memory storing a collaborative Parameter-Efficient Fine-Tuning (PEFT) model that is fine-tuned to personalize usage of the electronic device based on a dynamic knowledge graph stored in the dynamic database. The PEFT model may include a master PEFT model and an agent PEFT model. The executing the personalized service may include determining, based on the master PEFT model, one or more instructions to be performed; and executing the personalized service, via the agent PEFT model, based on the one or more instructions to be performed.

An electronic device according to an embodiment of the disclosure includes a memory storing at least one instruction, and at least one processor, wherein the at least one processor is configured to execute the at least one instruction, individually or collectively, to cause the electronic device to obtain user input information through at least one app installed on the electronic device, obtain, from the user input information, context information that includes information indicating a reason for an event and that relates to a personalized service from the user input information, obtain classified context information by classifying the context information based on reason information included in the context information and store the classified context information in a dynamic database, and execute the personalized service on the electronic device based on the context information and at least one other piece of context information connected to the context information.

According to an embodiment, the at least one instruction, when executed by the at least one processor, individually or collectively, may cause the electronic device to obtain connected context information by identifying, based on the reason information, at least one connection between the context information and the at least one other piece of context information (the at least one piece of other context information may be previously stored in the dynamic database), and store the connected context information in the dynamic database.

According to an embodiment, when first reason information is included in first context information obtained from the user input information, and second context information including second reason information is stored in the dynamic database, in the classifying of the context information and the storing of the classified context information in the dynamic database, the at least one instruction, when executed by the at least one processor, individually or collectively, may cause the electronic device to compare the first reason information with the second reason information, and based on identifying a correspondence between the first reason information and the second reason information obtain the connected context information by connecting the first context information to the second context information and store the connected context information in the dynamic database.

According to an embodiment, the reason information may be determined based on content of the user input information corresponding to the context information.

According to an embodiment, the context information may include explicit information and implicit information, the implicit information that may be determined based on content of the user input information. The implicit information may include the reason information.

According to an embodiment, in the obtaining of the context information, the at least one instruction, when executed by the at least one processor, individually or collectively, may cause the electronic device to determine a context from the user input information, obtain one or more pieces of explicit information from the user input information and determine the reason information, based on a generative model, using at least one of the context or the one or more pieces of explicit information.

According to an embodiment, the explicit information may include information about Who, What, Where, and When (subject information, event information, location information, and temporal information, respectively), and the reason information may include information about a reason for occurrence of an event corresponding to the context information.

According to an embodiment, the user input information may include at least one of information input by a user to the electronic device, information based on a usage pattern in which the user uses the electronic device, information about an action performed by the user through the electronic device, or information displayed on a screen of the electronic device based on usage of the electronic device by the user.

A method of providing a personalized service based on a dynamic database according to an embodiment may include obtaining user input information with respect to an electronic device, selecting a type of the personalized service to be provided based on a context of the user input information, and providing the personalized service of the selected type based on the dynamic database stored in the electronic device, wherein the dynamic database is updated based on context information obtained from the user input information, and the context information may include implicit information that may be determined based on the user input information.

According to an embodiment, the providing of the personalized service may include determining whether there is an app preferred by a user and related to the personalized service of the selected type, generating a deeplink for executing the app when there is the app preferred by the user, transmitting the generated deeplink to an agent model, and the agent model providing the personalized service by executing the app preferred by the user through the deeplink.

According to an embodiment, the providing of the personalized service may include obtaining the context information from the user input information, converting the context information into an embedding vector, and providing the personalized service based on a result of comparing the embedding vector with the dynamic database.

According to an embodiment, when a request for an entity is included in the user input information, the providing of the personalized service may include determining an entity indicated by the user based on a context of a screen of the electronic device and processing the request by using the determined entity.

According to an embodiment, when the user input information includes a request for control of another device, the providing of the personalized service may include accessing the dynamic database to obtain control information corresponding to the other device, and controlling the other device based on the control information, and the control information may be updated based on a usage history indicating the electronic device has controlled the other device.

According to an embodiment, the personalized service may include at least one of a call summary, a chat summary, schedule saving, device control, photo search, or automatic answer generation.

According to an embodiment, the selecting of the type of the personalized service may include determining a context of the user input information in real time, performing knowledge graph based reasoning based on a result of determining the context, and selecting the type of the personalized service based on a result of performing knowledge graph based reasoning.

According to an embodiment, the selecting of the type of the personalized service may include, when information about a new schedule is included in the user input information, selecting a personalized service for updating the schedule in an app for managing the schedule.

According to an embodiment, the selecting of the type of the personalized service may include, when the user input information includes a call content or a chat content, selecting a personalized service for summarizing and saving the call content or the chat content.

According to an embodiment, the implicit information included in the context information may be determined based on the overall context of the user input information.

An electronic device according to an embodiment includes a memory storing a program or at least one instruction, and at least one processor, wherein the at least one processor is configured to execute the program or at least one instruction stored in the memory to cause the electronic device to obtain user input information with respect to an electronic device, select a type of the personalized service to be provided based on a context of the user input information, and then provide the personalized service of the selected type based on the dynamic database stored in the electronic device, wherein the dynamic database is updated based on context information obtained from the user input information, and the context information may include implicit information that may be determined based on the user input information.

According to an embodiment, in the providing of the personalized service, the electronic device may determine whether there is an app preferred by a user and related to the personalized service of the selected type, generate a deeplink for executing the app when there is the app preferred by the user, and transmit the generated deeplink to an agent model, and the agent model may provide the personalized service by executing the app preferred by the user through the deeplink.

According to an embodiment, in the providing of the personalized service, the electronic device may obtain the context information from the user input information, convert the context information into an embedding vector, and provide the personalized service based on a result of comparing the embedding vector with the dynamic database.

According to an embodiment, when a request for an entity is included in the user input information, in the providing of the personalized service, the electronic device may determine an entity indicated by the user based on a context of a screen of the electronic device and process the request by using the determined entity.

According to an embodiment, when the user input information includes a request for control of another device, in the providing of the personalized service, the electronic device may access the dynamic database to obtain control information corresponding to the other device, and then control the other device based on the control information, and the control information may be updated based on a usage history indicating the electronic device has controlled the other device.

According to an embodiment, the personalized service may include at least one of a call summary, a chat summary, schedule saving, device control, photo search, or automatic answer generation.

According to an embodiment, in the selecting of the type of the personalized service, the electronic device may determine a context of the user input information in real time, perform knowledge graph based reasoning based on a result of determining the context, and then select the type of the personalized service based on a result of performing knowledge graph based reasoning.

According to an embodiment, in the selecting of the type of the personalized service, when information about a new schedule is included in the user input information, the electronic device may select a personalized service for updating the schedule in an app for managing the schedule.

According to an embodiment, in the selecting of the type of the personalized service, when the user input information includes a call content or a chat content, the electronic device may select a personalized service for summarizing and saving the call content or the chat content.

Various embodiments of the disclosure may be implemented or supported by one or more computer programs that may be generated from computer-readable program code and included on computer-readable media. As used herein, the terms "application" and "program" may refer to one or more computer programs, software components, instruction sets, procedures, functions, objects, classes, instances, associated data, or parts thereof for implementation in computer-readable program code. The "computer-readable program code" may include various types of computer code, including source code, object code, and executable code. The "computer-readable media" may include various types of media that are accessible by a computer, such as ROM, RAM, hard disk drives (HDDs), CDs, DVDs, or various other types of memory.

A machine-readable storage medium may be provided in the form of a non-transitory storage medium. Here, the "non-transitory storage medium" is a tangible device and may exclude wired, wireless, optical, or other communication links that transmit transient electrical or other signals. The term "non-transitory storage medium" does not differentiate between where data is semi-permanently stored in the storage medium and where the data is temporarily stored in the storage medium. For example, the 'non-transitory storage medium' may include a buffer for temporarily storing data. The computer-readable media may be any available media that are accessible by a computer and include both volatile and nonvolatile media and both removable and non-removable media. The computer-readable media include media on which data may be permanently stored and media on which data may be stored and overwritten later, such as rewritable optical disks or erasable memory devices.

According to an embodiment, methods according to various embodiments of the disclosure set forth herein may be included in a computer program product when provided. The computer program product may be traded, as a product, between a seller and a buyer. The computer program product may be distributed in the form of a machine-readable storage medium (e.g., CD-ROM) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

The above description of the disclosure is provided for illustration, and it will be understood by one of ordinary skill in the art that changes in form and details may be readily made therein without departing from technical idea or characteristics of the disclosure. For example, appropriate effects may be achieved even when the above-described techniques are performed in a different order than that described above, and/or the components of the systems, structures, devices, or circuits, for example, are coupled or combined in different forms and modes than those described above or are replaced or supplemented by other components or their equivalents. The above-described embodiments of the disclosure and all aspects thereof are examples and are not limiting. For example, each component defined as an integrated component may be implemented in a distributed fashion, and likewise, components defined as separate components may be implemented in an integrated form.

The scope of the disclosure is defined not by the detailed description thereof but by the following claims, and all the changes or modifications within the meaning and scope of the appended claims and their equivalents will be construed as being included in the scope of the disclosure.

## Claims

1. A method of managing a dynamic database for providing a personalized service comprising:
obtaining user input information through at least one application (app) installed on an electronic device;
obtaining, from the user input information, context information that comprises information indicating a reason for an event and that relates to the personalized service;
obtaining classified context information by classifying the context information based on reason information included in the context information, and storing the classified context information in the dynamic database,; and
executing the personalized service on the electronic device based on the context information and at least one other piece of context information connected to the context information.

2. The method of claim 1, wherein the obtaining the classified context information and the storing the classified context information comprises:
obtaining connected context information by identifying, based on the reason information, at least one connection between the context information and the at least one other piece of context information, wherein the at least one other piece of context information is previously stored in the dynamic database, and storing the connected context information in the dynamic database.

3. The method of claim 1 or 2, wherein, first reason information is included in first context information obtained from the user input information,
wherein second context information comprising second reason information is stored in the dynamic database, and
wherein the classifying the context information and the storing the classified context information comprises:
comparing the first reason information with the second reason information; and
based on identifying correspondence between the first reason information and the second reason information, obtaining the connected context information by connecting the first context information to the second context information, and storing the connected context information in the dynamic database.

4. The method of any one of claims 1 to 3, wherein the reason information is determined based on content of the user input information corresponding to the context information.

5. The method of any one of claims 1 to 4, wherein the context information comprises:
explicit information, and
implicit information that is determined based on content of the user input information, and
wherein the implicit information comprises the reason information.

6. The method of any one of claims 1 to 5, wherein the obtaining the context information comprises:
determining a context from the user input information;
obtaining one or more pieces of explicit information from the user input information; and
determining the reason information, based on a generative model, using at least one of the context or the one or more pieces of explicit information.

7. The method of any one of claims 1 to 6, wherein the one or more pieces of explicit information comprises event information and at least one of subject information, location information, or temporal information, and
wherein the reason information comprises the information indicating the reason for the event, and the event corresponds to the event information.

8. The method of any one of claims 1 to 7, wherein the user input information comprises at least one of:
information input to the electronic device by a user,
information based on a usage pattern of the electronic device by the user,
information based on an action performed on the electronic device by the user, or
information displayed on a screen of the electronic device based on usage of the electronic device by the user.

9. The method of any one of claims 1 to 8, wherein the obtaining the user input information comprises:
storing a user input to the at least one app by a user; or
identifying a screen displayed on the electronic device corresponding to the at least one app.

10. An electronic device comprising:
memory (1400) storing at least one instruction; and
at least one processor (1300) comprising processing circuitry,
wherein the at least one instruction, when executed by the at least one processor (1300), individually or collectively, cause the electronic device (1000) to:
obtain user input information through at least one application (app) installed on the electronic device (1000),;
obtain, from the user input information, context information that comprises information indicating a reason for an event and that relates to a personalized service;
obtain classified context information by classifying the context information based on reason information included in the context information, and store the classified context information in a dynamic database,; and
execute the personalized service on the electronic device based on the context information and at least one other piece of context information connected to the context information.

11. The electronic device of claim 10, wherein, the at least one instruction, when executed by the at least one processor (1300), individually or collectively, cause the electronic device (1000) to obtain connected context information by identifying, based on the reason information, at least one connection between the context information and the at least one other piece of context information, wherein the at least one other piece of context information is previously stored in the dynamic database, and store the connected context information in the dynamic database.

12. The electronic device of claim 10 or 11, wherein, first reason information is included in first context information obtained from the user input information,
wherein second context information comprising second reason information is stored in the dynamic database, and
wherein the at least one instruction, when executed by the at least one processor (1300), individually or collectively, cause the electronic device (1000) to:
compare the first reason information with the second reason information; and
based on identifying a correspondence between the first reason information and the second reason information, obtain the connected context information by connecting the first context information to the second context information, and store the connected context information in the dynamic database.

13. The electronic device of any one of claims 10 to 12, wherein the reason information is determined based on content of the user input information corresponding to the context information.

14. The electronic device of any one of claims 10 to 13, wherein the context information comprises:
explicit information, and
implicit information that is determined based on content of the user input information, and
wherein the implicit information comprises the reason information.

15. The electronic device of any one of claims 10 to 14, wherein the at least one instruction, when executed by the at least one processor (1300), individually or collectively, cause the electronic device (1000) to:
determine a context from the user input information;
obtain one or more pieces of explicit information from the user input information; and
determine the reason information, based on a generative model, using at least one of the context or the one or more pieces of explicit information.
